(19) **Europäisches Patentamt / European Patent Office / Office européen des brevets**

(11) **EP 4 601 378 A1**

(12) **EUROPEAN PATENT APPLICATION**
published in accordance with Art. 153(4) EPC

(43) Date of publication:
**13.08.2025  Bulletin 2025/33**

(21) Application number: **23884662.0**

(22) Date of filing: **24.10.2023**

(51) International Patent Classification (IPC):
*H04W 72/0446* (2023.01)

(52) Cooperative Patent Classification (CPC):
**H04W 72/0446; H04W 72/0453; H04W 72/40**

(86) International application number:
**PCT/CN2023/126202**

(87) International publication number:
**WO 2024/093730 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **05.11.2022   CN 202211381023**

(71) Applicant: **CICT Connected and Intelligent
Technologies Co., Ltd.
Chongqing 400041 (CN)**

(72) Inventors:
• **LIU, Yanqiang
  Chongqing 400000 (CN)**
• **ZHAO, Rui
  Chongqing 400000 (CN)**

(74) Representative: **Novagraaf Technologies
Bâtiment O2
2, rue Sarah Bernhardt
CS90017
92665 Asnières-sur-Seine Cedex (FR)**

(54) **SIDELINK RESOURCE ALLOCATION METHOD AND APPARATUS, AND TERMINAL**

(57)    The present disclosure relates to the technical field of communications. Provided are a method and apparatus for allocating sidelink resource, and a terminal. The method is applied to a first terminal, and includes: performing resource exclusion on resources in a candidate resource set in a first resource pool according to first information of a first wireless access module and second information of a second wireless access module.

Fig. 2

Resource exclusion is performed on resources in a candidate resource set in a first resource pool according to first information of a first wireless access module and second information of a second wireless access module   S201

EP 4 601 378 A1

## Description

### Cross-Reference to Related Application

The present disclosure claims priority to Chinese Patent Application No. 202211381023.2 filed in China on November 5, 2022, the disclosure of which is hereby incorporated by reference in its entirety.

### Technical Field

The present disclosure relates to the technical field of communications, and in particular, to a method and apparatus for allocating sidelink resource, and a terminal.

### Background

In related art, a Long Term Evolution (LTE) sidelink in a fourth-generation mobile communication network is allocated with its own dedicated spectrum, while spectrum allocation of a New Radio (NR) sidelink in a fifth-generation mobile communication network has not yet been determined. As some countries and regions have limited spectrum resources allocated to Cellular Vehicle to everything (C-V2X), and in order to support the technology migration from the LTE sidelink to the NR sidelink, it is necessary to study the co-channel coexistence of the LTE sidelink and the NR sidelink.

In the related art, there are roughly two solutions to achieve co-channel coexistence. One is (Time-Division Multiplexing (TDM) based or Frequency-Division Multiplexing (FDM) based) semi-static resource pool-level co-channel coexistence, that is, time-frequency resources are divided from a time domain or frequency domain into non-overlapping resource pools and allocated to the LTE sidelink and the NR sidelink respectively; and the other is dynamic resource pool sharing, that is, the resource pools or part of the resources of the LTE sidelink and the NR sidelink overlap in the time domain and the frequency domain.

However, there is currently no specific solution to implement dynamic resource pool sharing between the LTE sidelink and the NR sidelink.

### Summary

An objective of the present disclosure is to provide a method and apparatus for allocating sidelink resource, and a terminal, so as to solve the problem in the related art of dynamic resource pool sharing between an LTE sidelink and an NR sidelink.

In a first aspect, in order to achieve the above objective, embodiments of the present disclosure provide a method for allocating sidelink resource, applied to a first terminal, and the method includes the following operation.

Resource exclusion is performed on resources in a candidate resource set in a first resource pool according to first information of a first wireless access module and second information of a second wireless access module.

In a second aspect, in order to achieve the above objective, the embodiments of the present disclosure provide an apparatus for allocating sidelink resource, applied to a first terminal, and the apparatus includes an exclusion module.

The exclusion module is configured to perform resource exclusion on resources in a candidate resource set in a first resource pool according to first information of a first wireless access module and second information of a second wireless access module.

In a third aspect, in order to achieve the above objective, the embodiments of the present disclosure provide a terminal, including: a processor, a memory, and a program stored on the memory and runnable on the processor. The program is executed by the processor to implement the steps in the method for allocating sidelink resource as described in the first aspect.

In a fourth aspect, in order to achieve the above objective, the embodiments of the present disclosure provide a readable storage medium, on which a program or an instruction is stored. The program or the instruction is executed by a processor to implement the steps in the method for allocating sidelink resource as described in the first aspect.

The above technical solutions of the present disclosure have the following beneficial effects.

In the embodiments of the present disclosure, the first terminal can perform resource exclusion on the resources in the candidate resource set in the first resource pool through the first information from of the first wireless access module and the second information of the second wireless access module, thereby achieving dynamic resource pool sharing between transmissions using a first physical channel structure and transmissions using a second physical channel structure.

### Brief Description of the Drawings

Fig. 1 is a schematic diagram of a sensing window and a resource selection window for NR sidelink mode-2 resource allocation.

Fig. 2 is a schematic flowchart of a method for allocating sidelink resource according to some embodiments of the present disclosure.

Fig. 3 is a schematic diagram of a second sensing window according to some embodiments of present disclosure.

Fig. 4 is a first schematic diagram of Implementation 1 according to some embodiments of the present disclosure.

Fig. 5 is a second schematic diagram of Implementation 1 according to some embodiments of the present disclosure.

Fig. 6 is a third schematic diagram of Implementation 1 according to some embodiments of the present disclosure.

Fig. 7 is a fourth schematic diagram of Implementation 1 according to some embodiments of the present disclosure.

Fig. 8 is a first schematic diagram of Implementation 2 according to some embodiments of the present disclosure.

Fig. 9 is a second schematic diagram of Implementation 2 according to some embodiments of the present disclosure.

Fig. 10 is a schematic diagram of Implementation 3 according to some embodiments of the present disclosure.

Fig. 11 is a first schematic diagram of Implementation 5 according to some embodiments of the present disclosure.

Fig. 12 is a second schematic diagram of Implementation 5 according to some embodiments of the present disclosure.

Fig. 13 is a schematic structural diagram of an apparatus for allocating sidelink resource provided by some embodiments of the present disclosure.

Fig. 14 is a schematic structural diagram of a terminal provided by some embodiments of the present disclosure.

**Detailed Description of the Embodiments**

In order to make the technical problems, technical solutions, and advantages of the present disclosure clearer, a detailed description will be made below in conjunction with the drawings and specific embodiments.

In various embodiments of the present disclosure, it should be understood that, a magnitude of a sequence number of each process does not mean an execution sequence and the execution sequence of each process should be determined by its function and an internal logic and should not form any limit to an implementation process of the embodiments of the present disclosure.

In addition, terms "system" and "network" are often used interchangeably herein.

Terms "first", "second" and the like in the description and claims of the present disclosure are used for distinguishing similar objects rather than describing a specific sequence or a precedence order. It should be understood that the data used in such a way may be exchanged where appropriate, in order that the embodiments of the present disclosure can be implemented in an order other than those illustrated or described herein, and objects distinguished by "first" and "second" are generally of the same type, and the number of objects is not limited. For example, the first object may be one or more. In addition, "and/or" in the description and claims represents at least one of the connected objects, and the character "/" generally indicates that the contextual objects are in an "or" relationship.

When the embodiments of the present disclosure are described, a conceptual description will be made first.

1. Type A devices: Rel-18 dual-module devices, which have both a first wireless access module (NR sidelink module) and a second wireless access module (LTE sidelink module).

Type B devices: Rel-14/Rel-15 devices, including only the LTE sidelink module.

It is to be noted that a first terminal in some embodiments of the present disclosure is the Type A device.

2. NR sidelink mode-2 resource allocation method

NR sidelink mode-2 resource allocation aims to support enhanced application requirements that cannot be supported by Rel-15 LTE-V2X technology, and adopts a distributed resource scheduling manner (that is, a User Equipment (UE) autonomously selects transmission resources). Since there is no unified scheduling by a base station, the UE needs to determine the resource occupancy of other UEs through a sensing mechanism and perform resource selection according to a sensing result. A resource selection process of NR sidelink mode-2 is as follows.

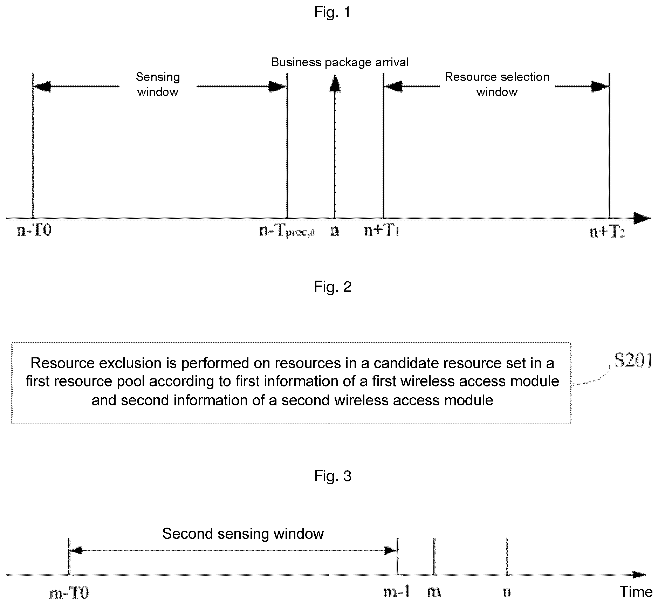

At S1, a candidate single slot resource $R_{x,y}$ is x+j consecutive sub-channels on a slot $t_y$, where j=0, ..., $L_{subCH}$-1. The UE considers that any $L_{subCH}$ consecutive sub-channels within the time range [n+$T_1$, n+$T_2$] in a corresponding resource pool are one candidate single slot resource. Referring to Fig. 1, Fig. 1 is a schematic diagram of a sensing window and a resource selection window for NR sidelink mode-2 resource allocation. As shown in Fig. 1, $0 \leq T_1 \leq T_{proc,1}$, $T_{proc,1}$ represents a transmission processing delay (including a sensing-based resource selection time, a transmission preparation time of a Physical Sidelink Control Channel (PSCCH), and a transmission preparation time of a Physical Sidelink Shared Channel (PSSCH)) of the UE, the value may be {3, 5, 9, 17} physical slots, respectively corresponding to a Sub-Carrier Space (SCS){15, 30, 60, 120}kHz, $T_{2min}$ ≤$T_2$≤remaining Packet Delay Budget (PDB), $T_{2min}$ is the minimum value of $T_2$ configured by a high-level parameter t2min_SelectionWindow, remaining PDB is the remaining packet delay budget, where PDB is the packet delay budget. The total number of candidate single slot resources is $M_{total}$.

At S2, the UE continuously monitors the slot belonging to the corresponding resource pool within the sensing window [$n-T_0$, $n-T_{proc,0}$), except for the slot where its own transmission occurs. The following steps are executed according to the PSCCH decoded on the monitored slot and Reference Signal Received Power (RSRP) measurement performed. T0 is a length of the sensing window configured at a higher layer, $T_{proc,0}$ is a time of sensing result before UE processing, and the value may be {1, 1, 2, 4} physical slots, respectively corresponding to the SCS {15, 30, 60, 120} kHz.

At S3, Th($p_i$, $p_j$) indicates an RSRP threshold value corresponding to the i-th RSRP field in sl-ThresPSSCH-RSRP-List-r16, where i=$p_i$+($p_j$-1)*8.

At S4, $S_A$ is initialized as a set of all the candidate single slot resources.

At S5, if the candidate single slot resource $R_{x,y}$ satisfies all of the following conditions, the UE excludes the candidate single slot resource $R_{x,y}$ from the set $S_A$.

The UE does not monitor the slot $t'^{SL}_m$ at S2.

For any period allowed by the high-level parameter sl-ResourceReservePeriodList, the UE considers that a Sidelink Control Information (SCI) format 1-A is received on the slot $t'^{SL}_m$, a "Resource reservation period" field of the SCI format 1-A is set as the period, and the SCI format 1-A indicates all the sub-channels in the slot in the resource pool, satisfying a condition iii in S6.

At S5a, if the number of remaining candidate single slot resources $R_{x,y}$ in the set $S_A$ is less than $X*M_{total}$, then the set $S_A$ is initialized as the set of all the candidate single slot resources shown in S4.

At S6, if the candidate single slot resource $R_{x,y}$ satisfies all of the following conditions, the UE excludes the candidate single slot resource $R_{x,y}$ from the set $S_A$.

i. The UE receives the SCI format 1-A on the slot $t'^{SL}_m$, and the "Resource reservation period" field (if present) in the SCI format 1-A indicates a period value $P_{rsvp\_RX}$ and a "Priority" field indicates a priority $prio_{RX}$.

ii. An RSRP measurement value corresponding to the received SCI format 1-A is higher than Th($prio_{RX}$, $prio_{TX}$).

iii. The UE receives the SCI format 1-A on the slot $t'^{SL}_m$, and if the "Resource reservation period" field is present in the SCI format 1-A, the UE considers that the SCI format 1-A is also received on a slot $t'^{SL}_{m+q \times P'_{rsvp\_RX}}$, and a resource block which determined by the SCI format 1-A received on the slot $t'^{SL}_{m+q \times P'_{rsvp\_RX}}$ and the slot overlap with the candidate single slot resource corresponding to $R_{x,y+j \times P'_{rsvp\_TX}}$, where q=1, 2, ..., Q, j=0, 1, ..., $C_{resel}$-1, $P'_{rsvp\_RX}$ is a logical resource pool reservation period converted from $P_{rsvp\_RX}$, $P'_{rsvp\_TX}$ is a logical resource pool reservation period converted from $P_{rsvp\_TX}$, and $P_{rsvp\_TX}$ resource selects the resource reservation period of the UE.

At S7, if the number of remaining candidate single slot resources in $S_A$ is less than $X*M_{total}$, Th($p_i$, $p_j$) corresponding to each priority is increased by 3dB and S4 is returned. For given $prio_{TX}$, X is configured by a high-level parameter sl-xPercentage($prio_{TX}$).

At S8, the UE reports $S_A$ to the higher layer.

At S9, the higher layer selects transmission resources in $S_A$.

Referring to Fig. 2, Fig. 2 is a flowchart of a method for allocating sidelink resource according to some embodiments of the present disclosure. As shown in Fig. 2, the method is applied to a first terminal and includes the following steps.

At S201, resource exclusion is performed on resources in a candidate resource set in a first resource pool according to first information of a first wireless access module and second information of a second wireless access module.

In some embodiments of the present disclosure, the first terminal is a Type A device, which both has the first wireless access module and the second wireless access module. A physical channel structure corresponding to the first wireless access module is a first physical channel structure, and a physical channel structure corresponding to the second wireless access module is a second physical channel structure.

The candidate resource set may be a candidate resource set after executing the resource exclusion step of S5 or S6 in the NR sidelink mode-2 resource allocation method in the above conceptual description, or an initial candidate resource set without executing any resource exclusion step, or a candidate resource set after executing the resource exclusion method in some embodiments of the present disclosure.

In some embodiments of the present disclosure, the method for allocating sidelink resource applied to the first wireless access module of the first terminal is provided, including the following steps.

The second information transmitted by the second wireless access module is acquired.

Resource exclusion is performed on the resources in the candidate resource set in the first resource pool according to the second information and the first information of the first wireless access module.

The first wireless access module acquires the second information before performing resource selection.

In some embodiments of the present disclosure, the second wireless access module transmits the second information to the first wireless access module in a case of acquiring sharing request information of the first wireless access module, or the second wireless access module autonomously transmits the second information to the first wireless access module before the first wireless access module performs resource selection.

By adopting the method for allocating sidelink resource of the embodiments of the present disclosure, the first terminal can perform resource exclusion on the resources in the candidate resource set in the first resource pool through the first information of the first wireless access module and the second information of the second wireless access module, thereby achieving dynamic resource pool sharing between transmissions using the first physical channel structure and transmissions using the second physical channel structure.

In some embodiments of the present disclosure, the second information includes at least one of the following:

resource occupancy information when the second wireless access module performs transmission in a second resource pool;

logical subframe information in the second resource pool;

sub-channel configuration in the second resource pool;

resource reservation periods configured in the second resource pool;

second sensing information within a second sensing window; and

an unmonitored subframe within the second sensing window.

In some embodiments of the present disclosure, the sub-channel configuration in the second resource pool includes the number of sub-channels in the second resource pool and the number of physical resource blocks in the sub-channels.

In some embodiments of the present disclosure, the resource occupancy information when the second wireless access module performs transmission in the second resource pool includes at least one of the following:

a time domain position of a resource occupied when performing transmission in the second resource pool;

a frequency domain position of the resource occupied when performing transmission in the second resource pool;

a second resource reservation period when performing transmission in the second resource pool;

a priority of a transport block when performing transmission in the second resource pool;

a counter value of resource reservation when performing transmission in the second resource pool;

a time domain indication value of the resource occupied when performing transmission in the second resource pool; and

a frequency domain indication value of the resource occupied when performing transmission in the second resource pool.

In some embodiments of the present disclosure, the second sensing information includes at least one of the following obtained by the second wireless access module decoding target SCI, where the target SCI is SCI of a second terminal sensed by the second wireless access module in the second resource pool:

a time domain position of an indication resource;

a frequency domain position of the indication resource;

a resource reservation period of the indication resource;

a priority of a transport block corresponding to the indication resource;

an RSRP measurement value of the transport block corresponding to the indication resource;

a time domain indication value of the indication resource; and

a frequency domain indication value of the indication resource.

In some embodiments of the present disclosure, as shown in Fig. 3, the second sensing window is determined according to at least one of the following:

a moment at which the second wireless access module receives sharing request information from the first wireless access module, a sharing request is configured to request the second information;

a time point related to a cut-off moment of the second sensing window determined by the second wireless access module;

a length of the second sensing window determined by the second wireless access module; and

a length of the second sensing window in the sharing request information of the first wireless access module.

It is to be noted that the time point related to the cut-off moment of the second sensing window may be defined by the second wireless access module itself, defined according to other information, randomly defined or pre-configured.

Symbols in Fig. 3 will be described below.

n represents an arrival moment of a service package of the first wireless access module.

m represents the moment at which the second wireless access module receives the sharing request information of the first wireless access module or the time point related to the cut-off moment of the second sensing window determined by the second wireless access module.

T0 represents the length of the second sensing window determined by the second wireless access module or the length of the second sensing window in the sharing request information of the first wireless access module. The length of the second sensing window may be 1100 ms, 1000 ms or 100 ms.

In some embodiments of the present disclosure, the first information includes at least one of the following:

sub-channel configuration in the first resource pool;

logical slot information in the first resource pool;

an SCS configured in the first resource pool;

a resource reservation period configured in the first resource pool;

resource selection window configuration information when the first wireless access module performs resource selection in the first resource pool;

a first resource reservation period when the first wireless access module performs resource selection in the first resource pool;

a priority of a transport block to be transmitted by the first wireless access module in the first resource pool;

the number of sub-channels occupied by the transport block to be transmitted by the first wireless access module in the first resource pool;

first sensing information within a first sensing window; and

an unmonitored slot within the first sensing window.

In some embodiments of the present disclosure, the sub-channel configuration in the second resource pool includes the number of sub-channels in the first resource pool and the number of physical resource blocks in the sub-channels.

In some embodiments of the present disclosure, S201 includes at least one of the following implementations.

[Implementation 1]

At S2011, the first resource is obtained according to at least one of the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the second resource reservation period when the second wireless access module performs transmission in the second resource pool, the logical subframe information in the second resource pool, the time domain position of the resource occupied when the second wireless access module performs transmission in the second resource pool, the frequency domain position of the resource occupied when the second wireless access module performs transmission in the second resource pool, the counter value of resource reservation when the second wireless access module performs transmission in the second resource pool, the time domain indication value of the resources occupied when the second wireless access module performs transmission in the second resource pool, the frequency domain indication value of the resources occupied when the second wireless access module performs transmission in the second resource pool, the unmonitored subframe within the second sensing window, and the sub-channel configuration in the second resource pool in the second information. The first resource satisfies a first condition and/or a second condition.

The first condition is that the first resource or the second resource overlaps with a first target resource.

The second resource is a resource of j logical reservation periods after the first resource.

The logical reservation period corresponds to the first resource reservation period in the first information.

The first target resource is a resource or a subframe after target resource occupancy information is reserved in the second resource pool according to the second resource reservation period in the second information.

The target resource occupancy information is resource occupancy information when the second wireless access module performs transmission in the second resource pool in the second information.

The second condition is that the first resource or the second resource overlaps with a second target resource.

The second target resource is a resource or a subframe which is reserved by the target unmonitored subframe information in the second resource pool according to the second resource reservation period.

The target unmonitored subframe information is the unmonitored subframe within the second sensing window in the second information.

At S2012, resource exclusion is performed on the first resource in the candidate resource set.

[Implementation 2]

At S2011, the first resource is obtained according to at least one of the resource selection window configuration information when the first wireless access module performs resource selection in the first resource pool, the first resource reservation period when the first wireless access module performs resource selection in the first resource pool, the logical slot information in the first resource pool, the unmonitored slot within the first sensing window, the sub-channel configuration in the first resource pool, the SCS configured in the first resource pool, and the number of sub-channels occupied by the transport block to be transmitted by the first wireless access module in the first resource pool in the first information, and the resource reservation period configured in the second resource pool, a resource reservation period other than the second resource reservation period when the second wireless access module performs transmission in the second resource pool in the resource reservation period configured in the second resource pool, the resource reservation period of the indication resource in the second sensing information, the logical subframe information in the second resource pool, the unmonitored subframe within the second sensing window, and the sub-channel configuration in the second resource pool in the second information. The first resource satisfies a third condition and/or a fourth condition.

The third condition is that the first resource or the second resource overlaps with a third target resource.

The third target resource is a resource or a subframe which is reserved by the target unmonitored subframe information in the second resource pool according to a third resource reservation period.

The fourth condition is that the first resource or the second resource overlaps with a fourth target resource.

The fourth target resource is a resource or a subframe which is reserved by the target subframe information in the second resource pool according to the third resource reservation period.

The target subframe information is subframe information where the unmonitored slot within the first sensing window in the first information is located.

The third resource reservation period includes at least one of the following:

a resource reservation period in the resource reservation period configured in the second resource pool in the second information;

the resource reservation period other than the second resource reservation period in the resource reservation period configured in the second resource pool; and

the resource reservation period of the indication resource in the second sensing information.

At S2012, resource exclusion is performed on the first resource in the candidate resource set.

[Implementation 3]

At S2011, the first resource is obtained according to at least one of the resource selection window configuration information when the first wireless access module performs resource selection in the first resource pool, the first resource reservation period when the first wireless access module performs resource selection in the first resource pool, the resource reservation period configured in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the unmonitored subframe within the second sensing window. The first resource satisfies a fifth condition.

The fifth condition is that the first resource or the second resource overlaps with a fifth target resource.

The fifth target resource is a resource or a slot which is reserved by the unmonitored slot information contained in the target unmonitored subframe information in the second resource pool according to a fourth resource reservation period.

The fourth resource reservation period is the resource reservation period configured in the first resource pool in the first information.

At S2012, resource exclusion is performed on the first resource in the candidate resource set.

[Implementation 4]

At S2011, the first resource is obtained according to at least one of the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, and the priority of the transport block to be transmitted by the first wireless access module in the first resource pool in the first information, and the second sensing information, the logical subframe information in the second resource pool, and the sub-channel configuration in the second resource pool in the second information. The first resource satisfies a sixth condition.

The sixth condition is that the first resource or the second resource overlaps with a sixth target resource.

The sixth target resource is a resource or a subframe which is reserved by the target indication resource information in the second resource pool according to a fifth resource reservation period.

The target indication resource information is indication resource information in the second sensing information.

The fifth resource reservation period is the resource reservation period of the indication resource in the second sensing information.

At S2012, resource exclusion is performed on the first resource in the candidate resource set to obtain a first candidate resource set.

At S2013, the number of resources in the first candidate resource set is obtained.

At S2014, according to a comparison result of the number of resources in the first candidate resource set and the total number of initial resources in an initial candidate resource set, it is determined whether resource exclusion needs to be performed on the resources in the candidate resource set again.

In some embodiments of the present disclosure, S2014 includes the following two cases.

In case 1, if the comparison result is that the number of resources in the first candidate resource set is greater than or equal to a product of a pre-configured parameter and the total number of initial resources in the initial candidate resource set, resource exclusion is not performed on the resources in the candidate resource set again.

In case 2, if the comparison result is that the number of resources in the first candidate resource set is less than the product of the pre-configured parameter and the total number of initial resources in the initial candidate resource set, resource exclusion is performed on the resources in the candidate resource set again.

Further, in some embodiments of the present disclosure, the operation of performing resource exclusion on the resources in the candidate resource set includes the following operation.

The first candidate resource set is initialized as the initial candidate resource set, and in a case where the first resource satisfies a seventh condition, resource exclusion is performed on the resources in the initial candidate resource set obtained by initialization according to the first resource.

[Implementation 5]

At S2011, the first resource is obtained according to at least one of the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, and the priority of the transport block to be transmitted by the first wireless access module in the first resource pool in the first information, and the second sensing information, the logical subframe information in the second resource pool, and the sub-channel configuration in the second resource pool in the second information. The first resource satisfies the seventh condition.

The seventh condition includes the sixth condition, and the target indication resource information in the sixth condition satisfies an eighth condition.

In some embodiments of the present disclosure, the eighth condition includes at least one of the following.

The RSRP measurement value of the transport block corresponding to the indication resource in the second sensing information is greater than the RSRP threshold value.

The priority of the transport block corresponding to the indication resource in the second sensing information is greater than a priority threshold value.

Further, in some embodiments of the present disclosure, the RSRP threshold value is determined according to at least one of the following:

an RSRP list, which may be an RSRP list in related art;

a pre-configured RSRP list, which may be a user-defined RSRP list;

a pre-configured RSRP threshold value;

the priority of the transport block corresponding to the indication resource; and

the priority of the transport block to be transmitted by the first wireless access module in the first resource pool in the first information.

At S2012, resource exclusion is performed on the first resource in the candidate resource set.

It is to be noted that the above "overlap" may include the following two cases.

Case 1: Time domain overlap.

Case 2: Time domain overlap and frequency domain overlap.

The applicant will describe each of the above five implementations below.

[For Implementation 1]

The applicant provides two examples for illustration.

Example 1:

The first resource to be excluded is determined according to at least one piece of the following information: the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, the second resource reservation period when the second wireless access module performs transmission in the second resource pool, the logical subframe information in the second resource pool, the time domain position (subframe position) of the resource occupied when the second wireless access module performs transmission in the second resource pool, the frequency domain position of the resource occupied when the second wireless access module performs transmission in the second resource pool, the unmonitored subframe within the second sensing window, the counter value of resource reservation when the second wireless access module performs transmission in the second resource pool, the time domain indication value of the resources occupied when the second wireless access module performs transmission in the second resource pool, and the frequency domain indication value of the resources occupied when the second wireless access module performs transmission in the second resource pool.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is

$$R_{a,c+j*P'_{rxvp\_TX\_NR}}$$

.

Where j=0, 1, ..., $C_{resel}$-1.

$P'_{rxvp\_TX\_NR}$ **is** the logical resource reservation period mapped from the first resource reservation period to the first resource pool.

$C_{resel}$ is configured by the higher layer.

The resource reserved in the second resource pool by the resource occupancy information when the second wireless access module performs transmission in the second resource pool according to the second resource reservation period is a resource determined on a subframe

$$t_{x'+q*P'_{rxvp\_RX\_LTE}}$$

according to the time domain indication value of the resources occupied when the second wireless access module performs transmission in the second resource pool and/or the frequency domain indication value of the resources occupied when the second wireless access module performs transmission in the second resource pool, and/or, a resource determined on a subframe

$$t_{x'+TRIV+q*P'_{rxvp\_RX\_LTE}}$$

according to the time domain indication value of the resources occupied when the second wireless access module performs transmission in the second resource pool and/or the frequency domain indication value of the resources occupied when the second wireless access module performs transmission in the second resource pool.

Where q=0, 1, 2, ..., Q.

x' is the logical subframe mapped by a physical subframe x in the second resource pool.

x is the time domain position (subframe position) of the resource occupied when the second wireless access module performs transmission in the second resource pool.

$P'_{rxvp\_RX\_LTE}$ is the logical resource reservation period mapped from the second resource reservation period to the second resource pool.

TRIV is the time domain indication value of the resources occupied when the second wireless access module performs transmission in the second resource pool.

When the above resource

$$R_{a,c+j*P'_{rxvp\_TX\_NR}}$$ overlaps with the resource determined on the subframe $t_{x'+q*P'_{rxvp\_RX\_LTE}}$

and/or $t_{x'+TRIV+q*P'_{rxvp\_RX\_LTE}}$ in the time domain, the first resource $R_{a,c}$ is excluded.

Or, When the above resource $R_{a,c+j*P'_{rxvp\_TX\_NR}}$ overlaps with the subframe $t_{x'+q*P'_{rxvp\_RX\_LTE}}$ and/or

$t_{x'+TRIV+q*P'_{rxvp\_RX\_LTE}}$ in the time domain, the first resource $R_{a,c}$ is excluded.

Assuming that the counter value (Counter) of resource reservation when the second wireless access module performs transmission in the second resource pool is C_num, the value of Q may be as follows.

1) Q=C_num.

2) When x'+C_num*the physical subframe/slot corresponding to the logical resource reservation period of the second wireless access module is less than or equal to a trailing edge n+T2 of the resource selection window of the first wireless access module, Q=C_num, otherwise Q may be as follows.

    i. Q=p, x'+p*the subframe corresponding to the logical resource reservation period of the second wireless access module is greater than the trailing edge n+T2 of the resource selection window of the first wireless access module, x'+(p-1)*the subframe corresponding to the logical resource reservation period of the second wireless access module is less than the trailing edge n+T2 of the resource selection window of the first wireless access module.

    ii. Q=C_num-p (p is less than C_num, and p is pre-configured or flexibly selected), and satisfies that x'+Q*the physical subframe/slot corresponding to the logical resource reservation period of the second wireless access module is greater than or equal to the trailing edge n+T2 of the resource selection window of the first wireless access module.

3)
$$Q = \left\lceil \frac{n+T2 - x}{\text{second resource reservation period}} \right\rceil \text{ or}$$

$$Q = \left\lceil \frac{n+T2 - x}{\text{second resource reservation period}} \right\rceil + 1 \text{ or}$$

$$Q = \left\lceil \frac{n+T2 - m}{\text{second resource reservation period}} \right\rceil \text{ or}$$

$$Q = \left\lceil \frac{n+T2 - m}{\text{second resource reservation period}} \right\rceil + 1$$
. If C_num≤p, Q=C_num, otherwise Q=p.

4) If n-x<the second resource reservation period<n+T2-x,

$$Q = \left\lceil \frac{n+T2 - x}{\text{second resource reservation period}} \right\rceil \text{ or}$$

$$Q = \left\lceil \frac{n+T2 - x}{\text{second resource reservation period}} \right\rceil + 1$$
, otherwise Q=1 or Q=2.

5) If m-x<the second resource reservation period<n+T2-m,

$$Q = \left\lceil \frac{n+T2 - m}{\text{second resource reservation period}} \right\rceil \text{ or}$$

$$Q = \left\lceil \frac{n+T2 - m}{\text{second resource reservation period}} \right\rceil + 1$$
, otherwise Q=1 or Q=2.

6)
$$Q = \left\lceil \frac{n+T2 - x}{\text{second resource reservation period}} \right\rceil \text{ or}$$

$$Q = \left\lceil \frac{n+T2 - x}{\text{second resource reservation period}} \right\rceil + 1 \text{ or}$$

$$Q = \left\lceil \frac{n+T2 - m}{\text{second resource reservation period}} \right\rceil \text{ or}$$

$$Q = \left\lceil \frac{n+T2 - m}{\text{second resource reservation period}} \right\rceil + 1$$
.

The first physical channel structure (NR sidelink) supports a higher SCS, and the time domain resource granularity may be less than or equal to that of the second physical channel structure (LTE sidelink), so that the resources may completely overlap or partially overlap in the time domain.

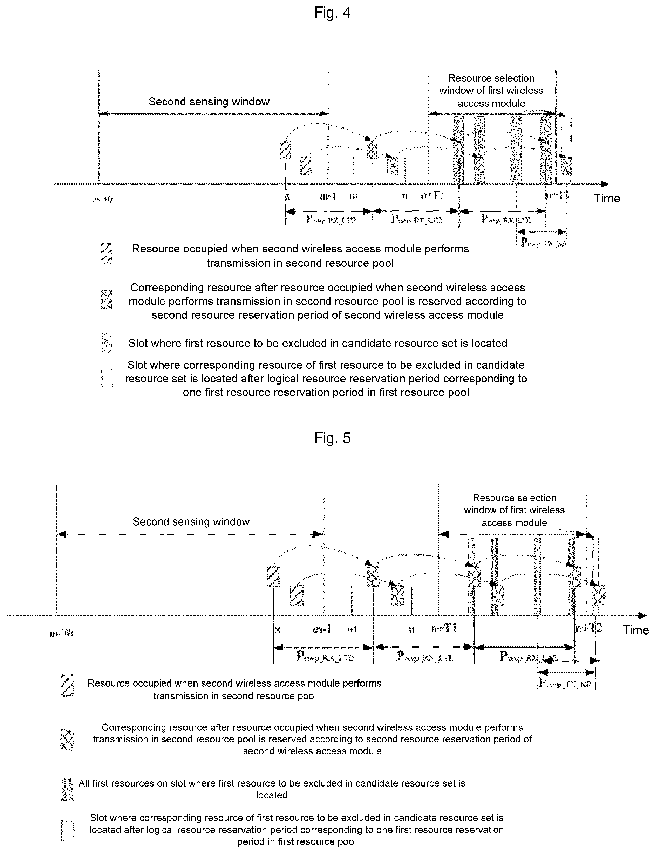

As shown in Fig. 4, the SCS of the first physical channel structure is 15 kHz (the resource granularity in the time domain is 1 slot=1 ms), the SCS of the second physical channel structure is 15 kHz (the resource granularity in the time domain is 1 subframe=1 ms), Q=3, and the SCSs completely overlap in the time domain when overlap occurs. In Fig. 4, $P_{rxvp\_RX\_LTE}$ **is** the second resource reservation period, and $P_{rxvp\_TX\_NR}$ is the first resource reservation period.

The above resource occupancy information when the second wireless access module performs transmission in the second resource pool may be:

a resource occupied when the second wireless access module transmits the current transport block;

a resource occupied by the transport block before the second wireless access module transmits the current transport block;

a resource occupied by the transport block after the second wireless access module transmits the current transport block;
or,

a resource occupied within the second sensing window of the second wireless access module; and

a resource occupied after the second sensing window of the second wireless access module.

The above current transport block refers to the latest transport block transmitted by the higher layer obtained by the low level of the second wireless access module.

As shown in Fig. 5, the SCS of the first physical channel structure is 30 kHz (the resource granularity in the time domain is 1 slot=0.5 ms), the SCS of the second physical channel structure is 15 kHz (the resource granularity in the time domain is 1 subframe=1 ms), Q=3, and the SCSs partially overlap in the time domain when overlap occurs. In Fig. 5, $P_{rxvP\_RX\_LTE}$ is the second resource reservation period, and $P_{rxvp\_TX\_NR}$ is the first resource reservation period.

Example 2:

The first resource is determined according to at least one piece of the following information: the resource selection window configuration information when the first wireless access module performs resource selection in the first resource pool, the first resource reservation period when the first wireless access module performs resource selection in the first resource pool, the logical slot information in the first resource pool, the logical subframe information in the second resource pool, the sub-channel configuration in the first resource pool, the SCS configured in the first resource pool, the number of sub-channels occupied by the transport block to be transmitted by the first wireless access module in the first resource pool, the second resource reservation period when the second wireless access module performs transmission in the second resource pool, the time domain position (subframe position) of the resource occupied when the second wireless access module performs transmission in the second resource pool, the frequency domain position of the resource occupied when the second wireless access module performs transmission in the second resource pool, the unmonitored subframe within the second sensing window, the counter value of resource reservation when the second wireless access module performs transmission in the second resource pool, the time domain indication value of the resources occupied when the second wireless access module performs transmission in the second resource pool, and the frequency domain indication value of the resources occupied when the second wireless access module performs transmission in the second resource pool in the first information.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is $R_{a,c+j*P'_{rxvp\_TX\_NR}}$.

Where j=0, 1, ..., $C_{resel}$-1.

$P'_{rxvp\_TX\_NR}$ is the logical resource reservation period mapped from the first resource reservation period to the first resource pool.

$C_{resel}$ is configured by the higher layer.

The resources reserved in the second resource pool by the unmonitored subframe information within the second sensing window according to the second resource reservation period are all the resources on the subframe $t_{x'+q*P'_{rxvp\_RX\_LTE}}$, or the subframe reserved in the second resource pool by the unmonitored subframe information within the second sensing window according to the second resource reservation period is

$$t_{x'+q*P'_{rxvp\_RX\_LTE}}.$$

Where q=0, 1, 2, ..., Q.

x' is the logical subframe mapped by the physical subframe x in the second resource pool.

x is the physical subframe position of the unmonitored subframe within the second sensing window.

$P'_{rxvp\_RX\_LTE}$ is the logical resource reservation period mapped from the second resource reservation period to the second resource pool.

When the above resource

$R_{a,c+j*P'_{rxvp\_TX\_NR}}$ overlaps with the resource

$$t_{x'+q*P'_{rxvp\_RX\_LTE}}$$

on the subframe in the time domain and the frequency domain, the first resource $R_{a,c}$ is excluded.

Or, when the above resource

$$R_{a,c+j*P'_{rxvp\_TX\_NR}}$$

overlaps with the subframe

$$t_{x'+q*P'_{rxvp\_RX\_LTE}}$$ in the time domain, the first resource $R_{a,c}$ is excluded.

Assuming that the counter value of resource reservation when the second wireless access module performs transmission in the second resource pool is C_num, the value of Q may be as follows.

    1) Q=C_num.

    2) When x'+C_num*the physical subframe/slot corresponding to the logical resource reservation period of the second wireless access module is less than or equal to the trailing edge n+T2 of the resource selection window of the first wireless access module, Q=C_num, otherwise Q may be as follows.

        i. Q=p, x'+p*the subframe corresponding to the logical resource reservation period of the second wireless access module is greater than the trailing edge n+T2 of the resource selection window of the first wireless access module, x'+(p-1)*the subframe corresponding to the logical resource reservation period of the second wireless access module is less than the trailing edge n+T2 of the resource selection window of the first wireless access module.

        ii. Q=C_num-p (p is less than C_num, and p is pre-configured or flexibly selected), and satisfies that x'+Q*the physical subframe/slot corresponding to the logical resource reservation period of the second wireless access module is greater than or equal to the trailing edge n+T2 of the resource selection window of the first wireless access module.

3) $$Q = \left\lceil \frac{n+T2 - x}{\text{second resource reservation period}} \right\rceil$$ or

$$Q = \left\lceil \frac{n+T2 - x}{\text{second resource reservation period}} \right\rceil + 1$$ or

$$Q = \left\lceil \frac{n+T2 - m}{\text{second resource reservation period}} \right\rceil$$ or

$$Q = \left\lceil \frac{n+T2 - m}{\text{second resource reservation period}} \right\rceil + 1$$ . If

C_num≤p, Q=C_num, otherwise Q=p.

4) If n-x<the second resource reservation period<n+T2-x,

$$Q = \left\lceil \frac{n+T2 - x}{\text{second resource reservation period}} \right\rceil$$ or

$$Q = \left\lceil \frac{n+T2 - x}{\text{second resource reservation period}} \right\rceil + 1$$ ,

otherwise Q=1 or Q=2.

5) If m-x<the second resource reservation period<n+T2-m,

$$Q = \left\lceil \frac{n+T2 - m}{\text{second resource reservation period}} \right\rceil$$ or

$$Q = \left\lceil \frac{n+T2 - m}{\text{second resource reservation period}} \right\rceil + 1$$ ,

otherwise Q=1 or Q=2.

6) $$Q = \left\lceil \frac{n+T2 - x}{\text{second resource reservation period}} \right\rceil$$ or

$$Q = \left\lceil \frac{n+T2 - x}{\text{second resource reservation period}} \right\rceil + 1$$ or

$$Q = \left\lceil \frac{n+T2 - m}{\text{second resource reservation period}} \right\rceil$$ or

$$Q = \left\lceil \frac{n+T2 - m}{\text{second resource reservation period}} \right\rceil + 1$$ .

The first physical channel structure supports a higher SCS, and the time domain resource granularity may be less than or equal to that of the second physical channel structure, so that the resources may completely overlap or partially overlap in the time domain.

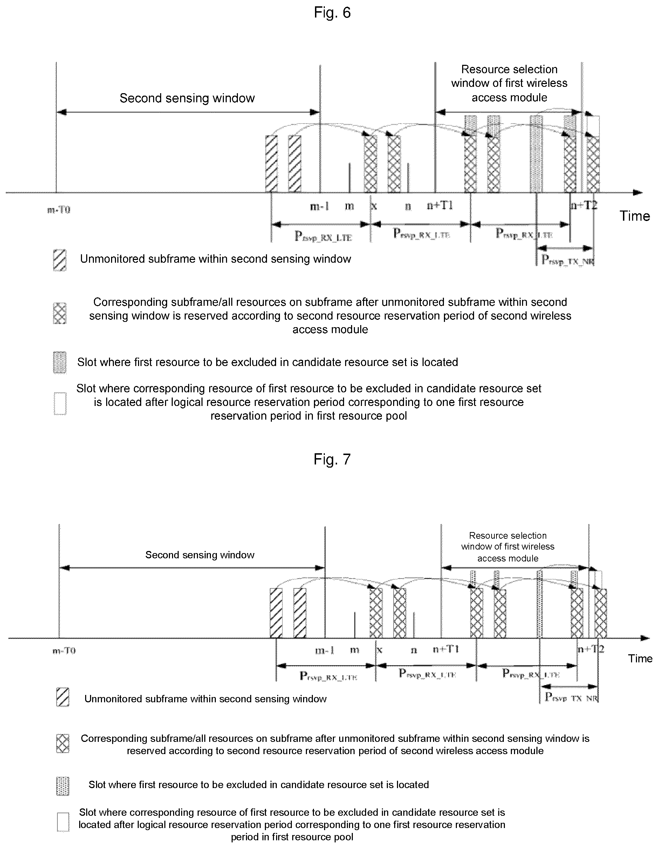

As shown in Fig. 6, the SCS of the first physical channel structure is 15 kHz (the resource granularity in the time domain is 1 slot=1 ms), the SCS of the second physical channel structure is 15 kHz (the resource granularity in the time domain is 1 subframe=1 ms), Q=3, and the SCSs completely overlap in the time domain when overlap occurs. In Fig. 6, $P_{xvp\_RX\_LTE}$ **is** the second resource reservation period, and $P_{rxvp\_TX\_NR}$ is the first resource reservation period.

As shown in Fig. 7, the SCS of the first physical channel structure is 30 kHz (the resource granularity in the time domain is 1 slot=0.5 ms), the SCS of the second physical channel structure is 15 kHz (the resource granularity in the time domain is 1 subframe=1 ms), Q=3, and the SCSs partially overlap in the time domain when overlap occurs. In Fig. 7, $P_{rxvp\_RX\_LTE}$ **is** the second resource reservation period, and $P_{rxvp\_TX\_NR}$ is the first resource reservation period.

[For Implementation 2]

In some embodiments of the present disclosure, for each unmonitored subframe within the second sensing window and the subframe where the unmonitored slot within the first sensing window is located, the first resource is determined according to at least one piece of the following information: the resource selection window configuration information when the first wireless access module performs resource selection in the first resource pool, the first resource reservation period when the first wireless access module performs resource selection in the first resource pool, the logical slot information in the first resource pool, the unmonitored slot within the first sensing window, the sub-channel configuration in the first resource pool, the SCS configured in the first resource pool, the number of sub-channels occupied by the transport block to be transmitted by the first wireless access module in the first resource pool, the resource reservation period configured in the second resource pool of the second wireless access module (or the resource reservation period other than the second resource reservation period when the second wireless access module performs transmission in the second resource pool in the resource reservation period configured in the second resource pool, or the resource reservation period of the indication resource in the second sensing information), the logical subframe information in the second resource pool, and the time domain position of the unmonitored subframe within the second sensing window.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is

$$R_{a,c+j*P'_{rxvp\_NR}}$$

Where j=0, 1, ..., $C_{resel}$-1.

$P'_{rxvp\_TX\_NR}$ **is** the logical resource reservation period mapped from the first resource reservation period to the resource pool of the first resource reservation period.

$C_{resel}$ is configured by the higher layer.

The resources reserved in the second resource pool by the shared half-duplex subframe information or the subframe where the unmonitored slot within the first sensing window is located according to the third resource reservation period are all the resources on the subframe

$$t_{x'+q*P'_{rxvp\_RX\_LTE}}$$

, or the subframe reserved in the second resource pool by the shared half-duplex subframe information or the subframe where the unmonitored slot within the first sensing window is located according to the third resource reservation period is the subframe

$$t_{x'+q*P'_{rxvp\_RX\_LTE}}$$
.

Where q=0, 1, 2, ..., Q.

The third resource reservation period is a resource reservation period in the resource reservation period configured in the second resource pool (or in the resource reservation periods configured in the second resource pool, the resource reservation period other than the second resource reservation period in the resource reservation periods configured in the second resource pool, or the resource reservation period of the indication resource in the second sensing information).

x' is the logical subframe mapped by the physical subframe x in the second resource pool.

x is the unmonitored subframe information within the second sensing window or the physical subframe position of the subframe where the unmonitored slot within the first sensing window is located.

$P'_{rxvp\_RX\_LTE}$ **is** the logical resource reservation period mapped from the third resource reservation period to the second resource pool.

When the above resource

$$R_{a,c+j*P'_{rxvp\_TX\_NR}}$$
overlaps with the resource

$$t_{x'+q*P'_{rxvp\_RX\_LTE}}$$
in the time domain and the frequency domain, the first resource $R_{a,c}$ is excluded.

Or, when the above resource

$$R_{a,c+j*P'_{rxvp\_TX\_NR}}$$
overlaps with the subframe

$$t_{x'+q*P'_{rxvp\_RX\_LTE}}$$
in the time domain, the first resource $R_{a,c}$ is excluded.

A method of determining the value of Q may be as follows.

1) If m-x<the third resource reservation period<n+T2-m,

$$Q = \left\lceil \frac{n+T2-m}{\text{third resource reservation period}} \right\rceil$$

or

$$Q = \left\lceil \frac{n+T2-m}{\text{third resource reservation period}} \right\rceil + 1$$

,

otherwise Q=1 or Q=2.

2) If n-x<the third resource reservation period<n+T2-x,

$$Q = \left\lceil \frac{n+T2-x}{\text{third resource reservation period}} \right\rceil$$

$$Q = \left\lceil \frac{n+T2-x}{\text{third resource reservation period}} \right\rceil + 1$$

or

,

otherwise Q=1 or Q=2.

3)

$$Q = \left\lceil \frac{n+T2-x}{\text{third resource reservation period}} \right\rceil + 1$$

$$Q = \left\lceil \frac{n+T2-m}{\text{third resource reservation period}} \right\rceil + 1$$

or

.

The first physical channel structure supports a higher SCS, and the time domain resource granularity may be less than or equal to that of the second physical channel structure, so that the resources may completely overlap or partially overlap in the time domain.

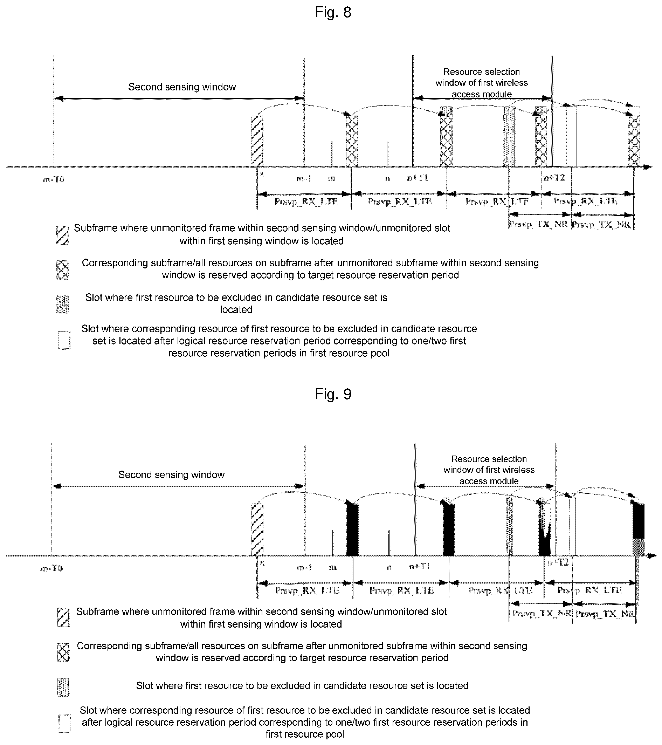

As shown in Fig. 8, the SCS of the first physical channel structure is 15 kHz (the resource granularity in the time domain is 1 slot=1 ms), the SCS of the second physical channel structure is 15 kHz (the resource granularity in the time domain is 1 subframe=1 ms), Q=4, and the SCSs completely overlap in the time domain when overlap is determined. In Fig. 8, $P_{rxvp\_RX\_LTE}$ is a resource reservation period in the resource reservation period configured in the second resource pool or the resource reservation period other than the second resource reservation period in the resource reservation period configured in the second resource pool or the resource reservation period of the indication resource in the second sensing information, and $P_{rxvp\_TX\_NR}$ is the first resource reservation period.

As shown in Fig. 9, the SCS of the first physical channel structure is 30 kHz (the resource granularity in the time domain is 1 slot=0.5 ms), the SCS of the second physical channel structure is 15 kHz (the resource granularity in the time domain is 1 subframe=1 ms), Q=4, and the SCSs partially overlap in the time domain when overlap is determined. In Fig. 9, $P_{rxvp\_RX\_LTE}$ is a resource reservation period in resource reservation period configured in the second resource pool or the resource reservation period other than the second resource reservation period in the resource reservation periods configured in the second resource pool or the resource reservation period of the indication resource in the second sensing information, and $P_{rxvp\_TX\_NR}$ is the first resource reservation period.

It is to be noted that resource exclusion is performed on the first resource in the candidate resource set. If the number of excluded resources in the candidate resource set is less than the product of the pre-configured parameter and the total number of initial resources corresponding to the initial candidate resource set, the candidate resource set obtained by resource exclusion is returned to a state before this step.

[For Implementation 3]

In some embodiments of the present disclosure, according to at least one piece of the following information: the resource selection window configuration information when the first wireless access module performs resource selection in the first resource pool, the first resource reservation period when the first wireless access module performs resource selection in the first resource pool, the resource reservation period configured in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is $R_{a,c+j*P'_{rxvp\_TX\_NR}}$.

Where j=0, 1, ..., $C_{resel}$-1.

$P'_{rxvp\_TX\_NR}$ is the logical resource reservation period mapped from the first resource reservation period to the first resource pool.

$C_{resel}$ is configured by the higher layer.

The resources reserved in the first resource pool by the unmonitored slot information contained in the unmonitored subframe within the second sensing window according to the resource reservation period configured in the first resource pool are all the resources on the slot $t_{x'+q*P'_{rxvp\_RX\_NR}}$, or the slot reserved in the first resource pool by the half-duplex slot information contained in the unmonitored subframe within the second sensing window according to the resource reservation period configured in the first resource pool is the slot $t_{x'+q*P'_{rxvp\_RX\_NR}}$.

Where q=0, 1, 2, ..., Q.

x' is the logical slot mapped by the physical subframe x in the first resource pool.

x is the physical subframe position of the unmonitored slot contained in the unmonitored subframe within the second sensing window.

$P'_{rxvp\_TX\_NR}$ is the logical resource reservation period of the resource reservation period configured in the first resource pool in the first resource pool.

When the above resource

$$R_{a,c+j*P'_{rxvp\_TX\_NR}}$$ overlaps with the resource on the slot $$t_{x'+q*P'_{rxvp\_RX\_NR}}$$ in the time domain and the frequency domain, the first resource $R_{a,c}$ is excluded.

Or, when the above resource

$$R_{a,c+j*P'_{rxvp\_TX\_NR}}$$ overlaps with the slot

$$t_{x'+q*P'_{rxvp\_RX\_NR}}$$ in the time domain, the first resource $R_{a,c}$ is excluded.

A method of determining the value of Q may be as follows.

1) If m-x<the resource reservation period configured in the first resource pool<n+T2-m,

$$Q = \left\lceil \frac{n+T2-m}{\text{resource reservation period configured in first resource pool}} \right\rceil$$ or

$$Q = \left\lceil \frac{n+T2-m}{\text{resource reservation period configured in first resource pool}} \right\rceil + 1$$,

otherwise Q=1 or Q=2.

2) $$Q = \left\lceil \frac{n+T2-x}{\text{resource reservation period configured in first resource pool}} \right\rceil$$ or

$$Q = \left\lceil \frac{n+T2-x}{\text{resource reservation period configured in first resource pool}} \right\rceil + 1$$ or

$$Q = \left\lceil \frac{n+T2-m}{\text{resource reservation period configured in first resource pool}} \right\rceil$$ or

$$Q = \left\lceil \frac{n+T2-m}{\text{resource reservation period configured in first resource pool}} \right\rceil + 1$$.

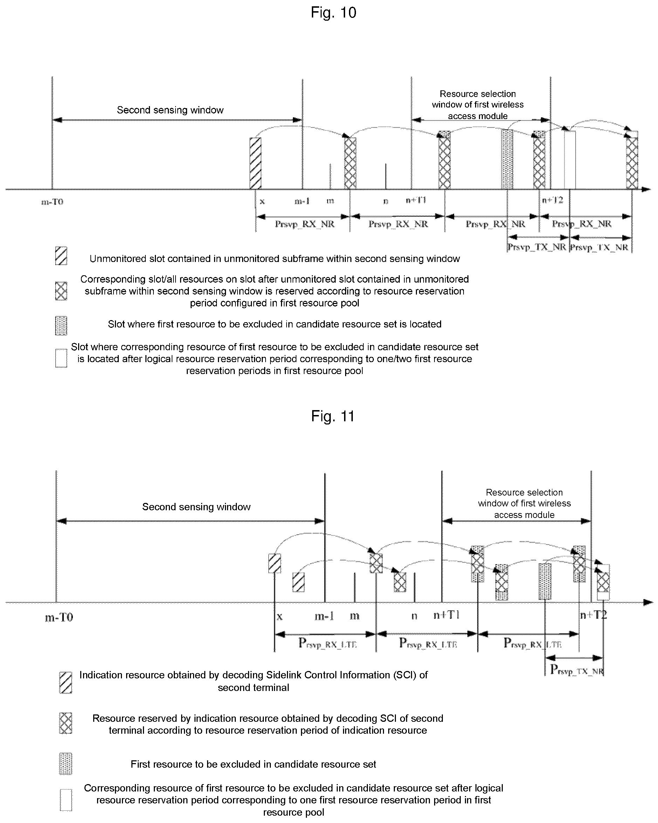

As shown in Fig. 10, the SCS of the first physical channel structure is 15 kHz (the resource granularity in the time domain is 1 slot=1 ms), the SCS of the second physical channel structure is 15 kHz (the resource granularity in the time domain is 1 subframe=1 ms), and the unmonitored subframe of one second physical channel structure contains only one slot of the first physical channel structure, where Q=4. In Fig. 10, $P'_{rxvp\_RX\_NR}$ is the resource reservation period configured in the first resource pool, and $P_{rxvp\_TX\_NR}$ is the first resource reservation period when the first wireless access module performs resource selection in the first resource pool.

It is to be noted that, in some embodiments of the present disclosure, S201 includes the following operations.

At S2011, the first resource is obtained according to at least one piece of information in S2011 in the above Implementation 3 and/or the unmonitored slot of the first wireless access module within the first sensing window.

At S2012, resource exclusion is performed on the first resource in the candidate resource set.

In some embodiments of the present disclosure, the following four cases are included.

In case 1, the first wireless access module first performs unmonitored slot exclusion on the unmonitored slot within the first sensing window (i.e., S5 in the conceptual description), and if, after exclusion, the number of remaining resources is less than the product of the pre-configured parameter and the total number of initial resources in the initial candidate resource set, then the candidate resource set is returned to the candidate resource set before exclusion or the candidate resource set after exclusion in the previous step.

Then, unmonitored slot exclusion is performed on the unmonitored slot contained in the unmonitored subframe within the second sensing window, and if, after exclusion, the number of remaining resources is less than the product of the pre-configured parameter and the total number of initial resources in the initial candidate resource set, the candidate resource set is returned to the candidate resource set before the exclusion operation or the candidate resource set after the exclusion operation in the previous step.

In case 2, the first wireless access module first performs unmonitored slot exclusion on the unmonitored slot contained in the unmonitored subframe within the second sensing window, and if, after exclusion, the number of remaining resources is less than the product of the pre-configured parameter and the total number of initial resources in the initial candidate resource set, the candidate resource set is returned to the candidate resource set before the exclusion operation or the candidate resource set after the exclusion operation in the previous step.

Then, unmonitored slot exclusion is performed on the unmonitored slot within the first sensing window (i.e., S5 in the conceptual description), and if, after exclusion, the number of remaining resources is less than the product of the pre-configured parameter and the total number of initial resources in the initial candidate resource set, then the candidate resource set is returned to the candidate resource set before the exclusion operation or the candidate resource set after the exclusion operation in the previous step.

In case 3, the first wireless access module performs unmonitored slot exclusion on the unmonitored slot within the first sensing window and/or the unmonitored slot contained in the unmonitored subframe within the second sensing window, and if, after exclusion, the number of remaining resources is less than the product of the pre-configured parameter and the total number of initial resources in the initial candidate resource set, the candidate resource set is returned to the candidate resource set before the exclusion operation or the candidate resource set after the exclusion operation in the previous step.

In case 4, the first wireless access module does not perform unmonitored slot exclusion on the unmonitored slot contained in the unmonitored subframe within the second sensing window, but only performs unmonitored slot exclusion on the unmonitored slot within the first sensing window (i.e., S5 in the conceptual description), and then executes S5a in the conceptual description.

[For Implementation 4]

The first resource is first determined according to at least one piece of the following information: the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, the priority of the transport block to be transmitted by the first wireless access module in the first resource pool, the second sensing information, the logical subframe information in the second resource pool, and the sub-channel configuration in the second resource pool.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is

$$R_{a,c+j*P'_{rxvp\_TX\_NR}}.$$

Where j=0, 1, ..., $C_{resel}$-1.

$P'_{rxvp\_TX\_NR}$ **is** the logical resource reservation period mapped from the first resource reservation period to the first resource pool.

$C_{resel}$ is configured by the higher layer.

The resource reserved in the second resource pool by the information of the indication resource in the second sensing information according to the resource reservation period of the indication resource in the second sensing information is the resource determined according to the time domain indication value of the indication resource and/or the frequency domain indication value of the indication resource on the subframe

$$t_{x'+q*P'_{rxvp\_RX\_LTE}},$$ and/or, the resource determined according to the time domain indication value of the indication resource and/or the frequency domain indication value of the indication resource on the subframe

$$t_{x'+TRIV+q*P'_{rxvp\_RX\_LTE}}.$$

Where q=0, 1, 2, ..., Q.

x' is the logical subframe mapped by the physical subframe x in the second resource pool.

x is the physical subframe position of the indication resource in the second sensing information.

$P'_{rxvp\_RX\_LTE}$ **is** the logical resource reservation period of the resource reservation period of the indication resource in the second resource pool.

TRIV is the time domain indication value of the indication resource.

When the above resource

$$R_{a,c+j*P'_{rxvp\_TX\_NR}}$$ overlaps with the resource

$$t_{x'+q*P'_{rxvp\_RX\_LTE}}$$

determined on                    and/or

$$t_{x'+TRIV+q*P'_{rxvp\_RX\_LTE}}$$ in the time domain and the frequency domain, the first resource $R_{a,c}$ is excluded.

A method of determining the value of Q may be as follows.

1) If m-x<the resource reservation period of the indication                    resource<n+T2-m,

$$Q = \left\lceil \frac{n+T2-m}{\text{resource reservation period of indication resource}} \right\rceil$$

or

$$Q = \left\lceil \frac{n+T2-m}{\text{resource reservation period of indication resource}} \right\rceil + 1$$

otherwise Q=1 or Q=2.

2) If n-x<the resource reservation period of the indication resource<n+T2-x,

$$Q = \left\lceil \frac{n+T2-x}{\text{resource reservation period of indication resource}} \right\rceil$$

or

$$Q = \left\lceil \frac{n+T2-x}{\text{resource reservation period of indication resource}} \right\rceil + 1$$

otherwise Q=1 or Q=2.

3)

$$Q = \left\lceil \frac{n+T2-x}{\text{resource reservation period of indication resource}} \right\rceil$$

or

$$Q = \left\lceil \frac{n+T2-x}{\text{resource reservation period of indication resource}} \right\rceil + 1$$

or

$$Q = \left\lceil \frac{n+T2-m}{\text{resource reservation period of indication resource}} \right\rceil$$

or

$$Q = \left\lceil \frac{n+T2-m}{\text{resource reservation period of indication resource}} \right\rceil + 1$$

The determination of frequency domain overlap requires at least one piece of the following information:

the frequency domain position of the first resource;

the frequency domain position of the indication resource in the second sensing information;

the sub-channel configuration in the second resource pool, including the size and number of sub-channels;

the sub-channel configuration in the first resource pool, including the size and number of sub-channels;

the logical slot information in the first resource pool;

and

the SCS configured in the first resource pool.

If the number of remaining resources in the candidate resource set after exclusion is less than the product of the pre-configured parameter and the total number of initial resources in the initial candidate resource set, the candidate resource set is initialized to the state before the exclusion operation is performed, and the resource exclusion in the following Implementation 5 is performed. If the number of remaining resources in the candidate resource set after exclusion is greater than or equal to the product of the pre-configured parameter and the total number of initial resources in the initial candidate resource set, the resource exclusion in Implementation 5 is not performed.

[For Implementation 5]

In some embodiments of the present disclosure, the first resource is first determined according to at least one piece of the following information: the resource selection window configuration information when the first wireless access module performs resource selection in the first resource pool, the first resource reservation period when the first wireless access module performs resource selection in the first resource pool, the SCS configured in the first resource pool, the sub-channel configuration in the first resource pool, the number of sub-channels occupied by the transport block to be transmitted by the first wireless access module in the first resource pool, the priority of the transport block to be transmitted by the first wireless access module in the first resource pool, the second sensing information, the logical subframe information in the second resource pool, and the sub-channel configuration in the second resource pool.

The position of one first resource (candidate single slot resource) is $R_{a,c}$ (a is the frequency domain position of the first resource, and c is the time domain position of the first resource). In the first resource pool, the resource of the $j^{th}$ $P'_{rxvp\_TX\_NR}$ after the first resource is $R_{a,c+j*P'_{rxvp\_TX\_NR}}$.

Where j=0, 1,..., $C_{resel}$-1.

$P'_{rxvp\_TX\_NR}$ **is** the logical resource reservation period mapped from the first resource reservation period to the first resource pool.

$C_{resel}$ is configured by the higher layer.

The resource reserved in the second resource pool by the information of the indication resource satisfying the eighth condition according to the resource reservation period of the indication resource in the second sensing information is the resource determined according to the time domain indication value of the indication resource and/or the frequency domain indication value of the indication resource on the subframe

$$t_{x'+q*P'_{rxvp\_RX\_LTE}}$$

, and/or, the resource determined according to the time domain indication value of the indication resource and/or the frequency domain indication value of the indication resource on the subframe

$$t_{x'+TRIV+q*P'_{rxvp\_RX\_LTE}}$$

.

Where q=0, 1, 2, ..., Q.

x' is the logical subframe mapped by the physical subframe x in the second resource pool.

x is the physical subframe position of the indication resource in the second sensing information.

$P'_{rxvp\_RX\_LTE}$ is the logical resource reservation period of the resource reservation period of the indication resource in the second resource pool.

TRIV is the time domain indication value of the indication resource.

$$R_{a,c+j*P'_{rxvp\_TX\_NR}}$$

When the above overlaps with the resource determined on

$$t_{x'+q*P'_{rxvp\_RX\_LTE}}$$

and/or

$$t_{x'+TRIV+q*P'_{rxvp\_RX\_LTE}}$$

in the time domain and the frequency domain, the first resource $R_{a,c}$ is excluded.

A method of determining the value of Q may be as follows.

1) If m-x<the resource reservation period of the indication resource<n+T2-m,

$$Q = \left\lceil \frac{n+T2-m}{\text{resource reservation period of indication resource}} \right\rceil$$ or

$$Q = \left\lceil \frac{n+T2-m}{\text{resource reservation period of indication resource}} \right\rceil + 1$$

otherwise Q=1 or Q=2.

2) If n-x<the resource reservation period of the indication resource<n+T2-x,

$$Q = \left\lceil \frac{n+T2-x}{\text{resource reservation period of indication resource}} \right\rceil$$ or

$$Q = \left\lceil \frac{n+T2-x}{\text{resource reservation period of indication resource}} \right\rceil + 1$$

otherwise Q=1 or Q=2.

3)

$$Q = \left\lceil \frac{n+T2-x}{\text{resource reservation period of indication resource}} \right\rceil$$ or

$$Q = \left\lceil \frac{n+T2-x}{\text{resource reservation period of indication resource}} \right\rceil + 1$$ or

$$Q = \left\lceil \frac{n+T2-m}{\text{resource reservation period of indication resource}} \right\rceil$$ or

$$Q = \left\lceil \frac{n+T2-m}{\text{resource reservation period of indication resource}} \right\rceil + 1$$

.

The first physical channel structure supports a higher SCS, and the time domain resource granularity may be less than or equal to that of the second physical channel structure, so that the resources may completely overlap or partially overlap in the time domain.

As shown in Fig. 11, the SCS of the first physical channel structure is 15 kHz (the resource granularity in the time domain is 1 slot=1 ms), the SCS of the second physical channel structure is 15 kHz (the resource granularity in the time domain is 1 subframe=1 ms), Q=3, and the SCSs partially overlap in the time domain when overlap is determined. In Fig. 11, $P_{rxvP\_RX\_LTE}$ is the resource reservation period of the indication resource, and $P_{rxvp\_TX\_NR}$ is the first resource reservation period.

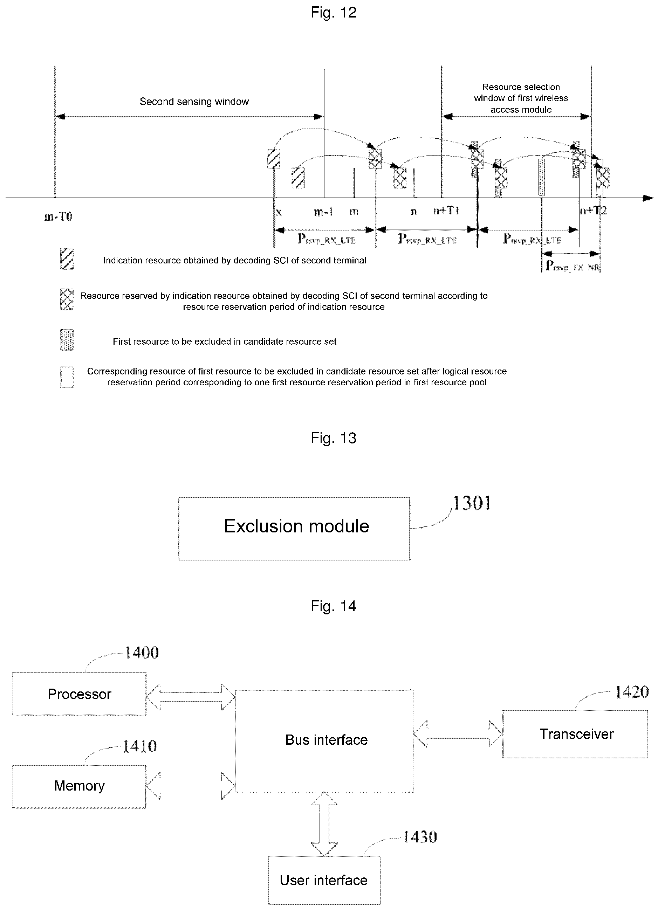

As shown in Fig. 12, the SCS of the first physical channel structure is 30 kHz (the resource granularity in the time domain is 1 slot=1 ms), the SCS of the second physical channel structure is 15 kHz (the resource granularity in the time domain is 1 subframe=1 ms), Q=3, and the SCSs partially overlap in the time domain when overlap is determined. In Fig. 12, $P_{rxvp\_RX\_LTE}$ is the resource reservation period of the indication resource, and $P_{rxvp\_TX\_NR}$ is the first resource reservation period.

The application of the seventh condition in Implementation 5 will be described below.

The seventh condition includes the sixth condition, and the target indication resource information in the sixth condition satisfies the eighth condition.

The eighth condition includes at least one of the following:

a ninth condition: the RSRP measurement value of the transport block corresponding to the indication resource in the second sensing information is greater than the RSRP threshold value; and

a tenth condition: the priority of the transport block corresponding to the indication resource in the second sensing information is greater than the priority threshold.

Exemplary exclusion operations may be as follows.

(1) For one first resource in any candidate resource set, if the sixth condition and the ninth condition are satisfied, the first resource is excluded from the candidate resource set.

If the number of resources in the candidate resource set after excluding the first resource is less than $X*M_{total}$, the corresponding RSRP threshold value is increased by I dB. The candidate resource set is initialized as the initial candidate resource set before any exclusion operation is performed, and resource exclusion is performed again.

(2) For one first resource in any candidate resource set, it is first determined whether the sixth condition and the tenth condition are satisfied. If so, the first resource is excluded from the candidate resource set, otherwise it is determined whether the sixth condition and the ninth condition are satisfied. If so, the first resource is excluded from the candidate resource set.

If the number of resources in the candidate resource set after excluding the first resource is less than $X*M_{total}$, the corresponding RSRP threshold value is increased by I dB. The candidate resource set is initialized as the initial candidate resource set before any exclusion operation is performed, and resource exclusion is performed again.

(3) For one first resource in any candidate resource set, it is first determined whether the sixth condition and the tenth condition are satisfied. If so, the first resource is excluded from the candidate resource set, otherwise it is determined whether the sixth condition and the ninth condition are satisfied. If so, the first resource is excluded from the candidate resource set.

If the number of resources in the candidate resource set after excluding the first resource is less than $X*M_{total}$, the corresponding RSRP threshold value is increased by I dB. The candidate resource set is initialized as the initial candidate resource set before the exclusion operation is performed, and resource exclusion is performed again.

The above X represents the pre-configured parameter, and $M_{total}$ represents the total number of initial resources in the initial candidate resource set.

Next, the resource selection process of the first wireless access module will be described.

Example 1:

At S1, S1 to S3 in the concept description are reused. In a case where [Implementation 5] is executed in S7 and the ninth condition needs to be satisfied, a method of determining the RSRP threshold value in the ninth condition in some embodiments of the present disclosure that needs to be satisfied according to the RSRP measurement value of the transport block corresponding to the indication resource in the second sensing information is added in S3 in the concept description.

At S2, S4 in the concept description is reused.
At S3, [Implementation 1] in some embodiments of the present disclosure is executed.
At S4, [Implementation 2] in some embodiments of the present disclosure is executed. If the number of resources in the candidate resource set after excluding is less than $X*M_{total}$, the candidate resource set is returned to the candidate resource set after the previous step (the previous step has been executed) is executed.

At S5, [Implementation 3] in some embodiments of the present disclosure is executed. If the number of resources in the candidate resource set after excluding is less than $X*M_{total}$, the candidate resource set is returned to the candidate resource set after the previous step (the previous step has been executed) is executed.

At S6, S6 in the concept description is reused.
At S7, [Implementation 4] and/or [Implementation 5] in some embodiments of the present disclosure are executed.

At S8, if the number of resources in the candidate resource set after excluding is less than $X*M_{total}$, the RSRP threshold value is increased, and the RSRP threshold value of the transport block corresponding to the indication resource in the second sensing information is increased by 3 dB; and if S7 exists, the RSRP threshold value of the transport block corresponding to the indication resource in the second sensing information is increased by I dB (I is a pre-configured fixed value, or I may be configured by decoding the transmission information of the second terminal in the second sensing information, or may also be increased by 3 dB) and returned to S2.

At S9, the first wireless access module reports the candidate resource set after resource exclusion to the higher layer, and the higher layer performs resource selection.

It is to be noted that the order of the above S3, S4 and S5 may be changed, and any number of S3, S4 and S5 may exist. When there are any number of steps, all or only any number or none of the existing steps may be executed.

The order of S6 and S7 may be changed, and S7 may exist or not.

Example 2:

At S1, S1 to S3 in the concept description are reused. In a case where [Implementation 5] is executed in S8 and the ninth condition needs to be satisfied, a method of determining the RSRP threshold value in the ninth condition in some embodiments of the present disclosure that needs to be satisfied according to the RSRP measurement value of the transport block corresponding to the indication resource in the second sensing information is added in S3 in the concept description.

At S2, S4 in the concept description is reused.

At S3, S5 in the concept description is reused. If the number of resources in the candidate resource set after excluding is less than $X*M_{total}$, the candidate resource set is returned to the candidate resource set after the previous step (the previous step has been executed) is executed.

At S4, [Implementation 1] in some embodiments of the present disclosure is executed.

At S5, [Implementation 2] in some embodiments of the present disclosure is executed. If the number of resources in the candidate resource set after excluding is less than $X*M_{total}$, the candidate resource set is returned to the candidate resource set after the previous step (the previous step has been executed) is executed.

At S6, [Implementation 3] in some embodiments of the present disclosure is executed. If the number of resources in the candidate resource set after excluding is less than $X*M_{total}$, the candidate resource set is returned to the candidate resource set after the previous step (the previous step has been executed) is executed.

At S7, S6 in the concept description is reused.

At S8, [Implementation 4] and/or [Implementation 5] in some embodiments of the present disclosure are executed.

At S9, if the number of resources in the candidate resource set after excluding is less than $X*M_{total}$, the RSRP threshold value is increased, and the RSRP threshold value of the transport block corresponding to the indication resource in the second sensing information is increased by 3 dB; and if S8 exists, the RSRP threshold value of the transport block corresponding to the indication resource in the second sensing information is increased by I dB (I is a pre-configured fixed value, or I may be configured by decoding the transmission information of the second terminal in the second sensing information, or may also be increased by 3 dB) and returned to S2.

At S10, the first wireless access module reports the candidate resource set after resource exclusion to the higher layer, and the higher layer performs resource selection.

It is to be noted that the order of the above S3, S4, S5 and S6 may be changed, and any number of S3, S4, S5 and S6 may exist. When there are any number of steps, all or only any number or none of the existing steps may be executed.

The order of S7 and S8 may be changed, and S8 may exist or not.

Further, S201 not only includes the above five implementations, but also first obtains the first resource according to the method of obtaining the first resource in the above five implementations, and then performs resource exclusion on the first resources obtained in different implementations respectively.

Here, in order to avoid repetition, the method of obtaining the first resource according to the above five implementations will not be repeated here. However, for the method of performing resource exclusion on the first resource obtained by different implementations respectively, it is to be noted that at least one of [Implementation 2], [Implementation 3] and [Implementation 4] may be executed; and one of [Implementation 4] and [Implementation 5] may be executed.

In summary, in the method for allocating sidelink resource of the embodiments of the present disclosure, the first terminal performs resource exclusion according to different information in the first information of the first wireless access module and the second information of the second wireless access module, which may avoid the collision of transmission resources of the first wireless access module and the second wireless access module in the first terminal, while excluding the resources occupied by the second physical channel structure as much as possible, reducing the resource collision when the second physical channel structure and the first physical channel structure co-exist on the same channel, reducing the influence on the performance of the second wireless access module as much as possible, achieving the co-channel coexistence of the physical channel structures, and being able to adapt to the potential dynamic changes of the service loads of the first physical channel structure and the second physical channel structure.

As shown in Fig. 13, the embodiments of the present disclosure further provide an apparatus for allocating sidelink resource, applied to a first terminal, and the apparatus includes an exclusion module 1301.

The exclusion module 1301 is configured to perform resource exclusion on resources in a candidate resource set in a first resource pool according to first information of a first wireless access module and second information of a second wireless access module.

By adopting the apparatus for allocating sidelink resource of the embodiments of the present disclosure, the first terminal can perform resource exclusion on the resources in the candidate resource set in the first resource pool through the first information from of the first wireless access module and the second information of the second wireless access module, thereby achieving dynamic resource pool sharing of transmissions using the first physical channel structure and transmissions using the second physical channel structure.

In some embodiments of the present disclosure, the second information includes at least one of the following:

resource occupancy information when the second wireless access module performs transmission in a second resource pool;

logical subframe information in the second resource pool;

sub-channel configuration in the second resource pool;

resource reservation periods configured in the second resource pool;

second sensing information within a second sensing window; and

an unmonitored subframe within the second sensing window.

In some embodiments of the present disclosure, the first information includes at least one of the following:

sub-channel configuration in the first resource pool;

logical slot information in the first resource pool;

an SCS configured in the first resource pool;

a resource reservation period configured in the first resource pool;

resource selection window configuration information when the first wireless access module performs resource selection in the first resource pool;

a first resource reservation period when the first wireless access module performs resource selection in the first resource pool;

a priority of a transport block to be transmitted by the first wireless access module in the first resource pool;

the number of sub-channels occupied by the transport block to be transmitted by the first wireless access module in the first resource pool;

first sensing information within a first sensing window; and

an unmonitored slot within the first sensing window.

In some embodiments of the present disclosure, the resource occupancy information when the second wireless access module performs transmission in the second resource pool includes at least one of the following:

a time domain position of a resource occupied when performing transmission in the second resource pool;

a frequency domain position of the resource occupied when performing transmission in the second resource pool;

a second resource reservation period when performing transmission in the second resource pool;

a priority of a transport block when performing transmission in the second resource pool;

a counter value of resource reservation when performing transmission in the second resource pool;

a time domain indication value of the resource occupied when performing transmission in the second resource pool; and

a frequency domain indication value of the resource occupied when performing transmission in the second resource pool.

In some embodiments of the present disclosure, the second sensing information includes at least one of the following obtained by the second wireless access module decoding target SCI, where the target SCI is SCI of a second terminal sensed by the second wireless access module in the second resource pool:

a time domain position of an indication resource;

a frequency domain position of the indication resource;

a resource reservation period of the indication resource;

a priority of a transport block corresponding to the indication resource;

an RSRP measurement value of the transport block corresponding to the indication resource;

a time domain indication value of the indication resource; and

a frequency domain indication value of the indication resource.

In some embodiments of the present disclosure, the second sensing window is determined according to at least one of the following:

a moment at which the second wireless access module receives sharing request information from the first wireless access module, a sharing request is configured to request the second information;

a time point related to a cut-off moment of the second sensing window determined by the second wireless access module;

a length of the second sensing window determined by the second wireless access module; and

a length of the second sensing window in the sharing request information of the first wireless access module.

In some embodiments of the present disclosure, the exclusion module 1301 may include: an obtaining unit and an exclusion unit.

The obtaining unit is configured to obtain a first resource in the candidate resource set according to the first information and the second information.

The exclusion unit is configured to perform resource exclusion on the resources in the candidate resource set according to the first resource.

The first resource satisfies at least one of the following conditions.

A first condition is that the first resource or the second resource overlaps with a first target resource.

The second resource is a resource of j logical reservation periods after the first resource.

The logical reservation period corresponds to the first resource reservation period in the first information.

The first target resource is a resource or a subframe which is reserved by the target resource occupancy information in the second resource pool according to the second resource reservation period in the second information.

The target resource occupancy information is resource occupancy information when the second wireless access module performs transmission in the second resource pool in the second information.

A second condition is that the first resource or the second resource overlaps with a second target resource.

The second target resource is a resource or a subframe which is reserved by the target unmonitored subframe information in the second resource pool according to the second resource reservation period.

The target unmonitored subframe information is unmonitored subframe information within the second sensing window in the second information.

A third condition is that the first resource or the second resource overlaps with a third target resource.

The third target resource is a resource or a subframe which is reserved by the target unmonitored subframe information in the second resource pool according to a third resource reservation period.

A fourth condition is that the first resource or the second resource overlaps with a fourth target resource.

The fourth target resource is a resource or a subframe which is reserved by the target subframe information in the second resource pool according to the third resource reservation period.

The target subframe information is subframe information where the unmonitored slot within the first sensing window in the first information is located.

The third resource reservation period includes at least one of the following:

a resource reservation period in the resource reservation periods configured in the second resource pool in the second information;

the resource reservation period other than the second resource reservation period in the resource reservation periods configured in the second resource pool; and

the resource reservation period of the indication resource in the second sensing information.

A fifth condition is that the first resource or the second resource overlaps with a fifth target resource.

The fifth target resource is a resource or a slot which is reserved by the unmonitored slot information contained in the target unmonitored subframe information in the second resource pool according to a fourth resource reservation period.

The fourth resource reservation period is a resource reservation period configured in the first resource pool in the first information.

A sixth condition is that the first resource or the second resource overlaps with a sixth target resource.

The sixth target resource is a resource or a subframe which is reserved by the target indication resource information in the second resource pool according to a fifth resource reservation period.

The target indication resource information is indication resource information in the second sensing information.

The fifth resource reservation period is the resource reservation period of the indication resource in the second sensing information.

A seventh condition includes the sixth condition, and the target indication resource information in the sixth condition satisfies an eighth condition.

In some embodiments of the present disclosure, the obtaining unit includes at least one of the following: a first sub-obtaining unit, a second sub-obtaining unit, a third sub-obtaining unit, and a fourth sub-obtaining unit.

The first sub-obtaining unit is configured to obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the second resource reservation period when the second wireless access module performs transmission in the second resource pool, the logical subframe information in the second resource pool, the time domain position of the resource occupied when the second wireless access module performs transmission in the second resource pool, the frequency domain position of the resource occupied when the second wireless access module performs transmission in the second resource pool, the counter value of resource reservation when the second wireless access module performs transmission in the second resource pool, the time domain indication value of the resources occupied when the second wireless access module performs transmission in the second resource pool, the frequency domain indication value of the resources occupied when the second wireless access module performs transmission in the second resource pool, the unmonitored subframe within the second sensing window, and the sub-channel configuration in the second resource pool in the second information.

The second sub-obtaining unit is configured to obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the unmonitored slot within the first sensing window, the sub-channel configuration in the first resource pool, the SCS configured in the first resource pool, and the number of sub-channels occupied by the transport block to be transmitted by the first wireless access module in the first resource pool in the first information, and the resource reservation periods configured in the second resource pool, the resource reservation period other than the second resource reservation period when the second wireless access module performs transmission in the second resource pool in the resource reservation periods configured in the second resource pool, the resource reservation period of the indication resource in the second sensing information, the logical subframe information in the second resource pool, the unmonitored subframe within the second sensing window, and the sub-channel configuration in the second resource pool in the second information.

The third sub-obtaining unit is configured to obtain the first resource according to at least one piece of information from the resource selection window configuration information when the first wireless access module performs resource selection in the first resource pool, the first resource reservation period when the first wireless access module performs resource selection in the first resource pool, the resource reservation period configured in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the unmonitored subframe within the second sensing window.

The fourth sub-obtaining unit is configured to obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, and the priority of the transport block to be transmitted by the first wireless access module in the first resource pool in the first information, and the second sensing information, the logical subframe information in the second resource pool, and the sub-channel configuration in the second resource pool in the second information.

In some embodiments of the present disclosure, in a case where the first resource satisfies at least one of the first condition, the second condition, the third condition, the fourth condition, the fifth condition, and the seventh condition, the exclusion unit is specifically configured to:

perform resource exclusion on the first resource in the candidate resource set.

In some embodiments of the present disclosure, in a case where the first resource satisfies the sixth condition, the exclusion unit includes: an obtaining subunit, an acquisition subunit, and a determination subunit.

The obtaining subunit is configured to perform resource exclusion on the first resource in the candidate resource set to obtain a first candidate resource set.

The obtaining subunit is configured to obtain the number of resources in the first candidate resource set.

The determination subunit is configured determine, according to a comparison result of the number of resources in the first candidate resource set and the total number of initial resources in an initial candidate resource set, whether resource exclusion needs to be performed on the resources in the candidate resource set again.

In some embodiments of the present disclosure, the determination subunit is specifically configured to:

> not perform, if the comparison result is that the number of resources in the first candidate resource set is greater than or equal to a product of a pre-configured parameter and the total number of initial resources in the initial candidate resource set, resource exclusion on the resources in the candidate resource set again; and

> perform, if the comparison result is that the number of resources in the first candidate resource set is less than the product of the pre-configured parameter and the total number of initial resources in the initial candidate resource set, resource exclusion on the resources in the candidate resource set again.

In some embodiments of the present disclosure, the determination subunit is further configured to: initialize the first candidate resource set as the initial candidate resource set, and perform, in a case where the first resource satisfies the seventh condition, resource exclusion on the resources in the initial candidate resource set obtained by initialization according to the first resource.

In some embodiments of the present disclosure, the eighth condition includes at least one of the following.

The RSRP measurement value of the transport block corresponding to the indication resource in the second sensing information is greater than an RSRP threshold value.

The priority of the transport block corresponding to the indication resource in the second sensing information is greater than a priority threshold.

In some embodiments of the present disclosure, the RSRP threshold value is determined according to at least one of the following:

> an RSRP list;

> a pre-configured RSRP list;

> a pre-configured RSRP threshold value;

> the priority of the transport block corresponding to the indication resource; and

> the priority of the transport block to be transmitted by the first wireless access module in the first resource pool in the first information.

It is to be noted that the apparatus for allocating sidelink resource provided by some embodiments of the present disclosure is an apparatus capable of executing the above method for allocating sidelink resource, and all the embodiments of the above method for allocating sidelink resource are applicable to the apparatus and can achieve the same or similar technical effects.

As shown in Fig. 14, the embodiments of the present disclosure further provide a terminal, including: a processor 1400; and a memory 1410 connected to the processor 1400 through a bus interface. The memory 1410 is configured to store programs and data used by the processor 1400 when performing operations, and the processor 1400 calls and executes the programs and data stored in the memory 1410.

The terminal further includes a transceiver 1420. The transceiver 1420 is connected to the bus interface and is configured to receive and transmit data under the control of the processor 1400.

In some embodiments of the present disclosure, the processor 1400 performs the following process.

Resource exclusion is performed on resources in a candidate resource set in a first resource pool according to first information of a first wireless access module and second information of a second wireless access module.

In some embodiments of the present disclosure, the second information includes at least one of the following:

> resource occupancy information when the second wireless access module performs transmission in a second resource pool;

> logical subframe information in the second resource pool;

> sub-channel configuration in the second resource pool;

> resource reservation periods configured in the second resource pool;

> second sensing information within a second sensing window; and

> an unmonitored subframe within the second sensing window.

In some embodiments of the present disclosure, the first information includes at least one of the following:

> sub-channel configuration in the first resource pool;

> logical slot information in the first resource pool;

> an SCS configured in the first resource pool;

> a resource reservation period configured in the first resource pool;

resource selection window configuration information when the first wireless access module performs resource selection in the first resource pool;

a first resource reservation period when the first wireless access module performs resource selection in the first resource pool;

a priority of a transport block to be transmitted by the first wireless access module in the first resource pool;

the number of sub-channels occupied by the transport block to be transmitted by the first wireless access module in the first resource pool;

first sensing information within a first sensing window; and

an unmonitored slot within the first sensing window.

In some embodiments of the present disclosure, the resource occupancy information when the second wireless access module performs transmission in the second resource pool includes at least one of the following:

a time domain position of a resource occupied when performing transmission in the second resource pool;

a frequency domain position of the resource occupied when performing transmission in the second resource pool;

a second resource reservation period when performing transmission in the second resource pool;

a priority of a transport block when performing transmission in the second resource pool;

a counter value of resource reservation when performing transmission in the second resource pool;

a time domain indication value of the resource occupied when performing transmission in the second resource pool; and

a frequency domain indication value of the resource occupied when performing transmission in the second resource pool.

In some embodiments of the present disclosure, the second sensing information includes at least one of the following obtained by the second wireless access module decoding target SCI, where the target SCI is SCI of a second terminal sensed by the second wireless access module in the second resource pool:

a time domain position of an indication resource;

a frequency domain position of the indication resource;

a resource reservation period of the indication resource;

a priority of a transport block corresponding to the indication resource;

an RSRP measurement value of the transport block corresponding to the indication resource;

a time domain indication value of the indication resource; and

a frequency domain indication value of the indication resource.

In some embodiments of the present disclosure, the second sensing window is determined according to at least one of the following:

a moment at which the second wireless access module receives sharing request information from the first wireless access module, a sharing request is configured to request the second information;

a time point related to a cut-off moment of the second sensing window determined by the second wireless access module;

a length of the second sensing window determined by the second wireless access module; and

a length of the second sensing window in the sharing request information of the first wireless access module.

In some embodiments of the present disclosure, the processor 1400 is specifically configured to:

obtain a first resource in the candidate resource set according to the first information and the second information; and

perform resource exclusion on the resources in the candidate resource set according to the first resource.

The first resource satisfies at least one of the following conditions.

A first condition is that the first resource or the second resource overlaps with a first target resource.

The second resource is a resource of j logical reservation periods after the first resource.

The logical reservation period corresponds to the first resource reservation period in the first information.

The first target resource is a resource or a subframe which is reserved by the target resource occupancy information in the second resource pool according to the second resource reservation period in the second information.

The target resource occupancy information is resource occupancy information when the second wireless access module performs transmission in the second resource pool in the second information.

A second condition is that the first resource or the second resource overlaps with a second target resource.

The second target resource is a resource or a subframe which is reserved by the target unmonitored subframe information in the second resource pool according to the second resource reservation period.

The target unmonitored subframe information is unmonitored subframe information within the second sensing window in the second information.

A third condition is that the first resource or the second resource overlaps with a third target resource.

The third target resource is a resource or a subframe which is reserved by the target unmonitored subframe information in the second resource pool according to a third resource reservation period.

A fourth condition is that the first resource or the second resource overlaps with a fourth target resource.

The fourth target resource is a resource or a subframe which is reserved by the target subframe information in the second resource pool according to the third resource reservation period.

The target subframe information is subframe information where the unmonitored slot within the first sensing window in the first information is located.

The third resource reservation period includes at least one of the following:

a resource reservation period in the resource reservation periods configured in the second resource pool in the second information;

the resource reservation period other than the second resource reservation period in the resource reservation periods configured in the second resource pool; and

the resource reservation period of the indication resource in the second sensing information.

A fifth condition is that the first resource or the second resource overlaps with a fifth target resource.

The fifth target resource is a resource or a slot which is reserved by the unmonitored slot information contained in the target unmonitored subframe information is reserved in the second resource pool according to a fourth resource reservation period.

The fourth resource reservation period is a resource reservation period configured in the first resource pool in the first information.

A sixth condition is that the first resource or the second resource overlaps with a sixth target resource.

The sixth target resource is a resource or a subframe which is reserved by the target indication resource information in the second resource pool according to a fifth resource reservation period.

The target indication resource information is indication resource information in the second sensing information.

The fifth resource reservation period is the resource reservation period of the indication resource in the second sensing information.

The seventh condition includes the sixth condition, and the target indication resource information in the sixth condition satisfies an eighth condition.

In some embodiments of the present disclosure, the processor 1400 is specifically configured to at least one of the following:

obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the second resource reservation period when the second wireless access module performs transmission in the second resource pool, the logical subframe information in the second resource pool, the time domain position of the resource occupied when the second wireless access module performs transmission in the second resource pool, the frequency domain position of the resource occupied when the second wireless access module performs transmission in the second resource pool, the counter value of resource reservation when the second wireless access module performs transmission in the second resource pool, the time domain indication value of the resources occupied when the second wireless access module performs transmission in the second resource pool, the frequency domain indication value of the resources occupied when the second wireless access module performs transmission in the second resource pool, the unmonitored subframe within the second sensing window, and the sub-channel configuration in the second resource pool in the second information;

obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the unmonitored slot within the first sensing window, the sub-channel configuration in the first resource pool, the SCS configured in the first resource pool, and the number of sub-channels occupied by the transport block to be transmitted by the first wireless access module in the first resource pool in the first information, and the resource reservation period configured in the second resource pool, the resource reservation period other than the second resource reservation period when the second wireless access module performs transmission in the second resource pool in the resource reservation period configured in the second resource pool, the resource reservation period of the indication resource in the second sensing information, the logical subframe information in the second resource pool, the unmonitored subframe within the second sensing window, and the sub-channel configuration in the second resource pool in the second information;

obtain the first resource according to at least one piece of information from the resource selection window configuration information when the first wireless access module performs resource selection in the first resource pool, the first resource reservation period when the first wireless access module performs resource selection in the first resource pool, the resource reservation period configured in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the unmonitored subframe within the second sensing window; and

obtain the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, and a priority of the transport block to be transmitted by the first wireless access module in the first resource pool in the first information, and the second sensing information, the logical subframe information in the second resource pool, and the sub-channel configuration in the second resource pool in the second information.

In some embodiments of the present disclosure, the processor 1400 is specifically configured to: perform resource exclusion on the first resource in the candidate resource set.

In some embodiments of the present disclosure, the processor 1400 is specifically configured to:

perform resource exclusion on the first resource in the candidate resource set to obtain a first candidate resource set;

obtain the number of resources in the first candidate resource set; and

determine, according to a comparison result of the number of resources in the first candidate resource set and the total number of initial resources in an initial candidate resource set, whether resource exclusion needs to be performed on the resources in the candidate resource set again.

In some embodiments of the present disclosure, the processor 1400 is specifically configured to:

not perform, if the comparison result is that the number of resources in the first candidate resource set is greater than or equal to a product of a pre-configured parameter and the total number of initial resources in the initial candidate resource set, resource exclusion on the resources in the candidate resource set again; and

perform, if the comparison result is that the number of resources in the first candidate resource set is less than the product of the pre-configured parameter and the total number of initial resources in the initial candidate resource set, resource exclusion on the resources in the candidate resource set again.

In some embodiments of the present disclosure, the processor 1400 is specifically configured to: initialize the first candidate resource set as the initial candidate resource set, and perform, in a case where the first resource satisfies the seventh condition, resource exclusion on the resources in the initial candidate resource set obtained by initialization according to the first resource.

In some embodiments of the present disclosure, the eighth condition includes at least one of the following.

The RSRP measurement value of the transport block corresponding to the indication resource in the second sensing information is greater than an RSRP threshold value.

The priority of the transport block corresponding to the indication resource in the second sensing information is greater than a priority threshold.

In some embodiments of the present disclosure, the RSRP threshold value is determined according to at least one of the following:

an RSRP list;

a pre-configured RSRP list;

a pre-configured RSRP threshold value;

the priority of the transport block corresponding to the indication resource; and

the priority of the transport block to be transmitted by the first wireless access module in the first resource pool in the first information.

In Fig. 14, the bus architecture may include any number of interconnected buses and bridges, specifically one or more processors represented by the processor 1400 and various circuits of a memory represented by the memory 1410 are linked together. The bus architecture may also link various other circuits such as peripherals, regulators, and power management circuits together, which are all well known in the art and are therefore not further described herein. The bus interface provides a user interface 1430. The transceiver 1420 may be a plurality of components, namely, including a transmitter and a receiver, providing a unit for communicating with various other apparatuses on a transmission medium. The processor 1400 is responsible for managing the bus architecture and general processing, and the memory 1410 may store the data used by the processor 1400 when performing operations.

In addition, the specific embodiments of the present disclosure further provide a readable storage medium, on which a computer program is stored. The program is executed by a processor to implement the steps in any above method for allocating sidelink resource.

In several embodiments provided by the present disclosure, it should be understood that the disclosed methods and apparatus may be implemented in other ways. For example, the apparatus embodiments described above are merely illustrative. For example, the division of the units is merely a logical function division, and there may be other divisions in actual implementation. For example, a plurality of units or components may be combined or integrated into another system, or some features can be ignored, or not implemented. In addition, coupling or direct coupling or communication connection between each displayed or discussed component may be indirect coupling or communication connection, implemented through some interfaces, of the device or the units, and may be electrical and mechanical or adopt other forms.

In addition, the functional units in the various embodiments of the present disclosure may be integrated into one processing unit, or each unit may include alone physically, or two or more than two units may be integrated into one unit. The above integrated unit may be implemented in the form of hardware, or may be implemented in the form of hardware and software functional units.

When being realized in form of software functional unit, the integrated unit may be stored in a computer-readable storage medium. The above software functional unit is stored in a storage medium, including a plurality of instructions configured to enable a computer device (which may be a personal computer, a server, a network device or the like) to execute all or part of the resource selection method in each embodiment of the present disclosure. The above storage medium includes: various media capable of storing program codes such as a U disk, a mobile hard disk, a Read-Only Memory (ROM), a Random Access Memory (RAM), a magnetic disk, or an optical disk.

The above description is the optional implementation of the present disclosure, and it is to be noted that those of ordinary skill in the art may also make several improvements and refinements principle without departing from the principle of the present disclosure, and these improvements and refinements shall all fall within the scope of protection of the present disclosure.

**Claims**

1. A method for allocating sidelink resource, applied to a first terminal, the method comprising:
performing resource exclusion on resources in a candidate resource set in a first resource pool according to first information of a first wireless access module and second information of a second wireless access module.

2. The method as claimed in claim 1, wherein the second information comprises at least one of the following:

resource occupancy information when the second wireless access module performs transmission in a second resource pool;
logical subframe information in the second resource pool;
sub-channel configuration in the second resource pool;
resource reservation periods configured in the second resource pool;

second sensing information within a second sensing window; and

an unmonitored subframe within the second sensing window.

3. The method as claimed in claim 1, wherein the first information comprises at least one of the following:

sub-channel configuration in the first resource pool;

logical slot information in the first resource pool;

a Sub-Carrier Space, SCS, configured in the first resource pool;

a resource reservation period configured in the first resource pool;

resource selection window configuration information when the first wireless access module performs resource selection in the first resource pool;

a first resource reservation period when the first wireless access module performs resource selection in the first resource pool;

a priority of a transport block to be transmitted by the first wireless access module in the first resource pool;

the number of sub-channels occupied by the transport block to be transmitted by the first wireless access module in the first resource pool;

first sensing information within a first sensing window; and

an unmonitored slot within the first sensing window.

4. The method as claimed in claim 2, wherein the resource occupancy information when the second wireless access module performs transmission in the second resource pool comprises at least one of the following:

a time domain position of a resource occupied when performing transmission in the second resource pool;

a frequency domain position of the resource occupied when performing transmission in the second resource pool;

a second resource reservation period when performing transmission in the second resource pool;

a priority of a transport block when performing transmission in the second resource pool;

a counter value of resource reservation when performing transmission in the second resource pool;

a time domain indication value of the resource occupied when performing transmission in the second resource pool; and

a frequency domain indication value of the resource occupied when performing transmission in the second resource pool.

5. The method as claimed in claim 2, wherein the second sensing information comprises at least one of the following obtained by the second wireless access module decoding target Sidelink Control Information, SCI, wherein the target SCI is SCI of a second terminal sensed by the second wireless access module in the second resource pool:

a time domain position of an indication resource;

a frequency domain position of the indication resource;

a resource reservation period of the indication resource;

a priority of a transport block corresponding to the indication resource;

a Reference Signal Received Power, RSRP, measurement value of the transport block corresponding to the indication resource;

a time domain indication value of the indication resource; and

a frequency domain indication value of the indication resource.

6. The method as claimed in claim 2, wherein the second sensing window is determined according to at least one of the following:

a moment at which the second wireless access module receives sharing request information from the first wireless access module, a sharing request is configured to request the second information;

a time point related to a cut-off moment of the second sensing window determined by the second wireless access module;

a length of the second sensing window determined by the second wireless access module; and

a length of the second sensing window in the sharing request information of the first wireless access module.

7. The method as claimed in claim 1, wherein the performing resource exclusion on resources in the candidate resource set in the first resource pool according to first information of the first wireless access module and second information of the second wireless access module comprises:

obtaining a first resource in the candidate resource set according to the first information and the second information; and

performing resource exclusion on the resources in the candidate resource set according to the first resource;

the first resource satisfies at least one of the following conditions:

a first condition: the first resource or a second resource overlaps with a first target resource;

wherein the second resource is a resource of j logical reservation periods after the first resource;

the logical reservation period corresponds to a first resource reservation period in the first information;

the first target resource is a resource or a subframe which is reserved by target resource occupancy information in a second resource pool according to a second resource reservation period in the second information;

the target resource occupancy information is resource occupancy information when the second wireless access module performs transmission in the second resource pool in the second information;a second condition: the first resource or the second resource overlaps with a second target resource;

wherein the second target resource is a resource or a subframe which is reserved by target unmonitored subframe information in the second resource pool according to the second resource reservation period;

the target unmonitored subframe information is unmonitored subframe information within the second sensing window in the second information;

a third condition: the first resource or the second resource overlaps with a third target resource;

wherein the third target resource is a resource or a subframe which is reserved by the target unmonitored subframe information in the second resource pool according to a third resource reservation period;

a fourth condition: the first resource or the second resource overlaps with a fourth target resource;

wherein the fourth target resource is a resource or a subframe which is reserved by the target subframe information in the second resource pool according to the third resource reservation period;

the target subframe information is subframe information where an unmonitored slot within the first sensing window in the first information is located;

the third resource reservation period comprises at least one of the following:

a resource reservation period in resource reservation periods configured in the second resource pool in the second information;

a resource reservation period other than the second resource reservation period in the resource reservation period configured in the second resource pool; and

a resource reservation period of an indication resource in the second sensing information;

a fifth condition: the first resource or the second resource overlaps with a fifth target resource;

the fifth target resource is a resource or a slot after unmonitored slot information contained in the target unmonitored subframe information is reserved in the second resource pool according to a fourth resource reservation period;

the fourth resource reservation period is a resource reservation period configured in the first resource pool in the first information;

a sixth condition: the first resource or the second resource overlaps with a sixth target resource;

wherein the sixth target resource is a resource or a subframe after target indication resource information is reserved in the second resource pool according to a fifth resource reservation period;

the target indication resource information is indication resource information in the second sensing information;

the fifth resource reservation period is the resource reservation period of the indication resource in the second sensing information; and

a seventh condition: comprising the sixth condition, the target indication resource information in the sixth condition satisfies an eighth condition.

8. The method as claimed in claim 7, wherein the obtaining the first resource in the candidate resource set according to the first information and the second information comprises at least one of the following:

obtaining the first resource according to at least one piece of information from resource selection window configuration information when the first wireless access module performs resource selection in the first resource pool, the first resource reservation period when the first wireless access module performs resource selection in the first resource pool, logical slot information in the first resource pool, sub-channel configuration in the first resource pool, an SCS configured in the first resource pool, and the number of sub-channels occupied by a transport block to be transmitted by the first wireless access module in the first resource pool in the first information, and the second resource reservation period when the second wireless access module performs transmission in the second resource pool, logical subframe information in the second resource pool, a time domain position of a resource occupied when the second wireless access module performs transmission in the second resource pool, a frequency domain position of the resource occupied when the second wireless access module performs transmission in the second resource pool, a counter value of resource reservation when the second wireless access module performs transmission in the second resource pool, a time domain indication value of the resources occupied when the second wireless access module performs transmission in the second resource pool, a frequency domain indication value of the resources occupied when the second wireless access module performs transmission in the second resource pool, an unmonitored subframe within the second sensing window, and sub-channel configuration in the second resource pool in the second information;

obtaining the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the unmonitored slot within the first sensing window, the sub-channel configuration in the first resource pool, the SCS configured in the first resource pool, and the number of sub-channels occupied by the transport block to be transmitted by the first wireless access module in the first resource pool in the first information, and the resource reservation period configured in the second resource pool, the resource reservation period other than the second resource reservation period when the second wireless access module performs transmission in the second resource pool in the resource reservation period configured in the second resource pool, the resource reservation period of the indication resource in the second sensing information, the logical subframe information in the second resource pool, the unmonitored subframe within the second sensing window, and the sub-channel configuration in the second resource pool in the second information;

obtaining the first resource according to at least one piece of information from the resource selection window configuration information when the first wireless access module performs resource selection in the first resource pool, the first resource reservation period when the first wireless access module performs resource selection in the first resource pool, the resource reservation period configured in the first resource pool, the logical slot information in the first resource pool, the sub-channel configuration in the first resource pool, the SCS configured in the first resource pool, and the number of sub-channels occupied by the transport block to be transmitted by the first wireless access module in the first resource pool in the first information, and the unmonitored subframe within the second sensing window; and

obtaining the first resource according to at least one piece of information from the resource selection window configuration information when the first wireless access module performs resource selection in the first resource pool, the first resource reservation period when the first wireless access module performs resource selection in the first resource pool, the logical slot information in the first resource pool, the sub-channel configuration in the first resource pool, the SCS configured in the first resource pool, the number of sub-channels occupied by the transport block to be transmitted by the first wireless access module in the first resource pool, and a priority of the transport block to be transmitted by the first wireless access module in the first resource pool in the first information, and the second sensing information, the logical subframe information in the second resource pool, and the sub-channel configuration in the second resource pool in the second information.

**9.** The method as claimed in claim 7, wherein in a case where the first resource satisfies at least one of the first condition, the second condition, the third condition, the fourth condition, the fifth condition, and the seventh condition, the performing resource exclusion on the resources in the candidate resource set according to the first resource comprises:
performing resource exclusion on the first resource in the candidate resource set.

**10.** (Currently Amended) The method as claimed in claim 7, wherein the performing resource exclusion on the resources in the candidate resource set according to the first resource comprises:

in a case where the first resource satisfies the sixth condition, performing resource exclusion on the first resource in the candidate resource set to obtain a first candidate resource set;
obtaining the number of resources in the first candidate resource set; and
determining, according to a comparison result of the number of resources in the first candidate resource set and the total number of initial resources in an initial candidate resource set, whether resource exclusion needs to be performed on the resources in the candidate resource set again.

11. The method as claimed in claim 10, wherein the determining, according to the comparison result of the number of resources in the first candidate resource set and the total number of initial resources in the initial candidate resource set, whether resource exclusion needs to be performed on the resources in the candidate resource set again comprises:

in response to that the comparison result is that the number of resources in the first candidate resource set is greater than or equal to a product of a pre-configured parameter and the total number of initial resources in the initial candidate resource set, not performing resource exclusion on the resources in the candidate resource set again; and
in response to that the comparison result is that the number of resources in the first candidate resource set is less than the product of the pre-configured parameter and the total number of initial resources in the initial candidate resource set, performing resource exclusion on the resources in the candidate resource set again.

12. The method as claimed in claim 11, wherein the performing resource exclusion on the resources in the candidate resource set comprises:
initializing the first candidate resource set as the initial candidate resource set, and in a case where the first resource satisfies the seventh condition, performing resource exclusion on the resources in the initial candidate resource set obtained by initialization according to the first resource.

13. The method as claimed in claim 7, wherein the eighth condition comprises at least one of the following:

an RSRP measurement value of a transport block corresponding to the indication resource in the second sensing information is greater than an RSRP threshold value; and
a priority of the transport block corresponding to the indication resource in the second sensing information is greater than a priority threshold.

14. The method as claimed in claim 13, wherein the RSRP threshold value is determined according to at least one of the following:

an RSRP list;
a pre-configured RSRP list;
a pre-configured RSRP threshold value;
the priority of the transport block corresponding to the indication resource; and
a priority of a transport block to be transmitted by the first wireless access module in the first resource pool in the first information.

15. An apparatus for allocating sidelink resource, applied to a first terminal, the apparatus comprising: an exclusion module, configured to perform resource exclusion on resources in a candidate resource set in a first resource pool according to first information of a first wireless access module and second information of a second wireless access module.

16. A terminal, comprising: a processor, a memory, and a program stored on the memory and runnable on the processor, wherein the program is executed by the processor to implement the steps in the method for allocating sidelink resource as claimed in any one of claims 1 to 14.

17. A readable storage medium, on which a program is stored, wherein the program is executed by a processor to implement the steps in the method for allocating sidelink resource as claimed in any one of claims 1 to 14.

Fig. 1

Business package arrival

Sensing
window

Resource selection
window

$n-T0$  $n-T_{proc,0}$  $n$  $n+T_1$  $n+T_2$

Fig. 2

Resource exclusion is performed on resources in a candidate resource set in a
first resource pool according to first information of a first wireless access module
and second information of a second wireless access module

$S201$

Fig. 3

Second sensing window

$m-T0$  $m-1$  $m$  $n$  Time

Fig. 4

Resource occupied when second wireless access module performs transmission in second resource pool

Corresponding resource after resource occupied when second wireless access module performs transmission in second resource pool is reserved according to second resource reservation period of second wireless access module

Slot where first resource to be excluded in candidate resource set is located

Slot where corresponding resource of first resource to be excluded in candidate resource set is located after logical resource reservation period corresponding to one first resource reservation period in first resource pool

Fig. 5

Resource occupied when second wireless access module performs transmission in second resource pool

Corresponding resource after resource occupied when second wireless access module performs transmission in second resource pool is reserved according to second resource reservation period of second wireless access module

All first resources on slot where first resource to be excluded in candidate resource set is located

Slot where corresponding resource of first resource to be excluded in candidate resource set is located after logical resource reservation period corresponding to one first resource reservation period in first resource pool

Fig. 6

| Unmonitored subframe within second sensing window |

Corresponding subframe/all resources on subframe after unmonitored subframe within second sensing window is reserved according to second resource reservation period of second wireless access module

Slot where first resource to be excluded in candidate resource set is located

Slot where corresponding resource of first resource to be excluded in candidate resource set is located after logical resource reservation period corresponding to one first resource reservation period in first resource pool

Fig. 7

Unmonitored subframe within second sensing window

Corresponding subframe/all resources on subframe after unmonitored subframe within second sensing window is reserved according to second resource reservation period of second wireless access module

Slot where first resource to be excluded in candidate resource set is located

Slot where corresponding resource of first resource to be excluded in candidate resource set is located after logical resource reservation period corresponding to one first resource reservation period in first resource pool

Fig. 8

Subframe where unmonitored frame within second sensing window/unmonitored slot within first sensing window is located

Corresponding subframe/all resources on subframe after unmonitored subframe within second sensing window is reserved according to target resource reservation period

Slot where first resource to be excluded in candidate resource set is located

Slot where corresponding resource of first resource to be excluded in candidate resource set is located after logical resource reservation period corresponding to one/two first resource reservation periods in first resource pool

Fig. 9

Subframe where unmonitored frame within second sensing window/unmonitored slot within first sensing window is located

Corresponding subframe/all resources on subframe after unmonitored subframe within second sensing window is reserved according to target resource reservation period

Slot where first resource to be excluded in candidate resource set is located

Slot where corresponding resource of first resource to be excluded in candidate resource set is located after logical resource reservation period corresponding to one/two first resource reservation periods in first resource pool

Fig. 10

Second sensing window

Resource selection
window of first wireless
access module

m-T0

x     m-1    m       n    n+T1           n+T2

Prsvp_RX_NR     Prsvp_RX_NR     Prsvp_RX_NR    Prsvp_RX_NR

Prsvp_TX_NR   Prsvp_TX_NR

Unmonitored slot contained in unmonitored subframe within second sensing window

Corresponding slot/all resources on slot after unmonitored slot contained in unmonitored
subframe within second sensing window is reserved according to resource reservation
period configured in first resource pool

Slot where first resource to be excluded in candidate resource set is located

Slot where corresponding resource of first resource to be excluded in candidate resource set
is located after logical resource reservation period corresponding to one/two first resource
reservation periods in first resource pool

Fig. 11

Second sensing window

Resource selection
window of first wireless
access module

m-T0

x     m-1    m       n    n+T1           n+T2

$P_{rsvp\_RX\_LTE}$    $P_{rsvp\_RX\_LTE}$    $P_{rsvp\_RX\_LTE}$

$P_{rsvp\_TX\_NR}$

Indication resource obtained by decoding Sidelink Control Information (SCI) of
second terminal

Resource reserved by indication resource obtained by decoding SCI of second
terminal according to resource reservation period of indication resource

First resource to be excluded in candidate resource set

Corresponding resource of first resource to be excluded in candidate resource set after logical
resource reservation period corresponding to one first resource reservation period in first
resource pool

Fig. 12

Second sensing window

Resource selection window of first wireless access module

m-T0

x    m-1    m         n    n+T1                    n+T2

$P_{rsvp\_RX\_LTE}$    $P_{rsvp\_RX\_LTE}$    $P_{rsvp\_RX\_LTE}$

$P_{rsvp\_TX\_NR}$

▨    Indication resource obtained by decoding SCI of second terminal

▩    Resource reserved by indication resource obtained by decoding SCI of second terminal according to resource reservation period of indication resource

▨    First resource to be excluded in candidate resource set

☐    Corresponding resource of first resource to be excluded in candidate resource set after logical resource reservation period corresponding to one first resource reservation period in first resource pool

Fig. 13

Exclusion module    1301

Fig. 14

1400

Processor

1410

Memory

Bus interface

1420

Transceiver

1430

User interface

38

## INTERNATIONAL SEARCH REPORT

| International application No. |
| --- |
| **PCT/CN2023/126202** |

### A. CLASSIFICATION OF SUBJECT MATTER

H04W72/0446(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 直通链路, 侧链路, 旁路, 副链路, 次链路, 共存, 资源, 选择, 排除, SL, sidelink, coexistence, resource, select, exclude, determine

### C. DOCUMENTS CONSIDERED TO BE RELEVANT

| Category* | Citation of document, with indication, where appropriate, of the relevant passages | Relevant to claim No. |
| --- | --- | --- |
| PX | CN 116801415 A (SAMSUNG ELECTRONICS CO., LTD.) 22 September 2023 (2023-09-22) description, paragraphs [0009]-[0317] | 1-17 |
| X | CN 115024004 A (BEIJING XIAOMI MOBILE SOFTWARE CO., LTD.) 06 September 2022 (2022-09-06) description, paragraphs [0003]-[0287] | 1-17 |
| X | US 2020037343 A1 (SAMSUNG ELECTRONICS CO., LTD.) 30 January 2020 (2020-01-30) description, paragraphs [0069]-[0540] | 1-17 |
| X | INTERDIGITAL, INC. "In-device Coexistence between LTE and NR V2X Sidelinks" *3GPP TSG RAN WG1 #99, R1-1912741*, 09 November 2019 (2019-11-09), sections 1-3 | 1-17 |
| A | CN 110972278 A (CHINA ACADEMY OF TELECOMMUNICATIONS TECHNOLOGY) 07 April 2020 (2020-04-07) entire document | 1-17 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 December 2023** | **05 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/126202**

| Patent document cited in search report | | | Publication date (day/month/year) | Patent family member(s) | | | Publication date (day/month/year) |
|---|---|---|---|---|---|---|---|
| CN | 116801415 | A | 22 September 2023 | EP | 4250855 | A1 | 27 September 2023 |
| | | | | US | 2023300800 | A1 | 21 September 2023 |
| | | | | KR | 20230137248 | A | 04 October 2023 |
| CN | 115024004 | A | 06 September 2022 | | None | | |
| US | 2020037343 | A1 | 30 January 2020 | WO | 2020022781 | A1 | 30 January 2020 |
| | | | | KR | 20210024191 | A | 04 March 2021 |
| CN | 110972278 | A | 07 April 2020 | EP | 3860271 | A1 | 04 August 2021 |
| | | | | EP | 3860271 | A4 | 08 December 2021 |
| | | | | EP | 3860271 | B1 | 06 December 2023 |
| | | | | US | 2021314920 | A1 | 07 October 2021 |
| | | | | US | 11252697 | B2 | 15 February 2022 |
| | | | | WO | 2020063403 | A1 | 02 April 2020 |

Form PCT/ISA/210 (patent family annex) (July 2022)

**REFERENCES CITED IN THE DESCRIPTION**

**Patent documents cited in the description**

- CN 202211381023